# EUROPEAN PATENT APPLICATION

(11) **EP 4 741 915 A1**
(43) Date of publication of application: **13.05.2026**
(21) Application number: 24835108.2
(22) Date of filing: 25.04.2024
(51) Int. Cl.: G02F 1/03, G09G 3/30

(54) **SHIFT CONTROL METHOD, APPARATUS AND SYSTEM FOR DIMMABLE DEVICE, AND MEDIUM**

(30) Priority: 06.07.2023 CN 202310826106
(71) Applicant: Shenzhen Guangyi Tech Co., Ltd., Shenzhen, Guangdong 518133 (CN)
(72) Inventor: YANG, Han, Shenzhen, Guangdong 518133 (CN); ZHONG, Zhuohong, Shenzhen, Guangdong 518133 (CN); XING, Xiaoshu, Shenzhen, Guangdong 518133 (CN)
(74) Representative: KIPA AB
(86) International application number: PCT/CN2024/089849
(87) International publication number: WO 2025/007623

(57) **Abstract**

A level-switch control method for a dimmable device, an apparatus, a medium, and a system. The level-switch control method includes the following steps: receiving a first level-switch instruction, where the first level-switch instruction carries a first target open-circuit voltage, and obtaining a first current open-circuit voltage and a current temperature of the dimmable device; determining a charging parameter or a discharging parameter applied to the dimmable device based on the current temperature, and determining a charging condition applied to the dimmable device based on the charging parameter or determining a discharging condition applied to the dimmable device based on the discharging parameter; and controlling the dimmable device to perform a charging operation based on the charging condition, or controlling the dimmable device to perform a discharging operation based on the discharging condition. According to the level-switch control method, the impact of temperature on a color-changing process of the dimmable device is considered, so that the color-changing reliability of the device is more effectively enhanced, and thus the user experience is improved.

## Description

### CROSS-REFERENCE TO RELATED APPLICATIONS

This disclosure claims the benefit of the Chinese Patent Application No. 2023108261066 filed with the Chinese Patent Office on July 6, 2023, entitled "Level-Switch Control Method for Dimmable Device, Apparatus, Medium, and System." The entire content of which is incorporated by reference in the present disclosure.

### TECHNICAL FIELD

The present disclosure relates to the field of electro-optical modulation technology, and more particularly, to a level-switch control method for a dimmable device, an apparatus, a medium, and a system.

### BACKGROUND

Electro-optical modulation technology is a technique that regulates the light beam by applying an external electric field to change the physical or chemical properties of a medium, causing changes in the intensity and spectral distribution of the light beam emitted through the medium. In recent years, devices that can utilize electro-optical modulation technology, such as liquidcrystal, electrochromic and other dimmable devices, have been increasingly applied to various fields such as electronic devices, wearable devices, vehicles and buildings.

In existing technologies, by applying different voltages or currents to dimmable devices, the devices can change color, that is, their color or light transmittance can be altered, allowing the light beam to pass through completely, partially, or not at all. According to different light beam transmittances, the chromatic state of the dimmable device can be categorized into different levels, and the process for controlling the dimmable device to change color can be called a level-switching process. However, the chromatic behavior of most dimmable devices depends not only on voltage/current but also on temperature. For example, under different temperatures, the color-changing reliability of the dimmable device can be different. Therefore, in the process of level-switching and regulating the dimmable device, it is often necessary to consider the impact of temperature on the color-changing process in order to more effectively enhance the color-changing reliability of the device.

### SUMMARY

In view of this, the present disclosure provides a level-switch control method and a related apparatus for a dimmable device, which takes into account the impact of temperature on the color-changing process of the dimmable device, so as to more effectively enhance the color-changing reliability of the device, and thus improve the user experience.

To overcome the above-mentioned shortcomings in the existing technologies, a first aspect of the present disclosure provides a level-switch control method for a dimmable device. The level-switch control method includes steps of: receiving a first level-switch instruction in which a first target open-circuit voltage is carried and obtaining a first current open-circuit voltage and a current temperature of the dimmable device; determining a charging parameter or a discharging parameter applied to the dimmable device based on the current temperature, and determining a charging condition applied to the dimmable device based on the charging parameter or determining a discharging condition applied to the dimmable device based on the discharging parameter; calculating to determine a first target charge quantity based on the first target open-circuit voltage and the first current open-circuit voltage, obtaining a current accumulated charge quantity of the dimmable device, and determining to perform a charging operation or a discharging operation on the dimmable device according to a magnitude relationship between the accumulated charge quantity and the first target charge quantity; and controlling the dimmable device to perform a charging operation based on the charging condition, or controlling the dimmable device to perform a discharging operation based on the discharging condition.

In the first aspect of the present disclosure, the current temperature of the dimmable device is obtained, and the charging parameter or the discharging parameter applied to the dimmable device is determined based on the current temperature, the charging condition used when charging the dimmable device is further determined based on the charging parameter, or determining the discharging condition used when discharging the dimmable device is further determined based on the discharging parameter. That is, the impact of temperature on the color-changing process (charging operation or discharging operation) of the dimmable device has been taken into account, the charging condition or discharging condition is determined according to the current temperature of the dimmable device, so that a more effective level-switching control of the dimmable device at different temperatures is achieved. Thereby the color-changing reliability of the dimmable device can be more effectively enhanced and the user experience is improved.

Further, the step of determining the charging parameter or the discharging parameter applied to the dimmable device based on the current temperature includes steps of: determining a temperature range corresponding to the current temperature; determining the charging parameter or the discharging parameter applied to the dimmable device according to the temperature range and a corresponding relationship between the temperature range and the charging parameter or the discharging parameter. Thus, the corresponding charging parameter or discharging parameter in different temperature ranges can be set in advance. When the detected current temperature falls into a corresponding temperature range, the charging parameter or the discharging parameter corresponding to the temperature range can be directly read. This simplifies the determination process of the charging parameter and the discharging parameter, which is conducive to accelerating the level-switching control process of the dimmable device and improving the color-changing rate of the dimmable device.

Further, the step of determining the charging parameter or the discharging parameter applied to the dimmable device based on the current temperature includes: determining a temperature range corresponding to the current temperature; determining a transmittance variation range of the dimmable device based on the temperature range and a corresponding relationship between the temperature range and the transmittance variation range; determining the charging parameter or the discharging parameter applied to the dimmable device according to the transmittance variation range and a corresponding relationship between the transmittance variation range and the charging parameter or the discharging parameter. In this case, considering the impact of temperature on the transmittance variation range of the dimmable device, different transmittance variation ranges corresponding to different temperature ranges are determined, and then the charging parameter or the discharging parameter are determined by the transmittance variation ranges. Thereby, when the dimmable device is controlled (charged or discharged) using the charging parameter or the discharging parameter determined in the above manner, the transmittance variation result of the dimmable device can be made more reliable, thus the user experience is improved.

Further, the charging parameter includes at least one of a maximum charging voltage, a maximum charging current, a charging cut-off current and a charging cut-off duration. Or alternatively, the discharging parameter includes at least one of a maximum discharging voltage, a maximum discharging current, a discharging cut-off current and a discharging cut-off duration. For the dimmable device, under different temperatures, when the same voltage or current is applied to perform the level-switching control, the color-changing rate of the dimmable device may be different, and under different temperatures, the maximum operating voltage and maximum operating current that the dimmable device can withstand may also be different. Thus, during the level-switching control process, the influence of temperature is taken into consideration, and the charging parameter and/or the discharging parameter of the dimmable device is(are) determined based on the temperature. That is, at least one of the maximum charging voltage, the maximum charging current, the charging cut-off current, the charging cut-off duration, the maximum discharging voltage, the maximum discharging current, the discharging cut-off current and the discharging cut-off duration of the dimmable device is determined based on the temperature, so that the color-changing rate of the dimmable device can be more effectively improved or the service life of the dimmable device can be prolonged, among other benefits, to enhance the color-changing reliability and ultimately improve the user experience.

Further, the first level-switch instruction also carries a first target level, and the level-switch control method also includes steps of: determining that the first target level is a current target level, and/or determining that the first target open-circuit voltage is a current target open-circuit voltage.

Further, after the charging operation is performed on the dimmable device based on the charging condition, or after the discharging operation is performed on the dimmable device based on the discharging condition, the level-switch control method also includes a step of: interrupting the charging operation when the charging cut-off condition is not met but a second level-switch instruction is received; or interrupting the discharging operation when the discharging cut-off condition is not met but the second level-switch instruction is received. Thus, when the charging cut-off condition or the discharging cut-off condition is not met, that is, in a case where a level-switching process of the dimmable device has not yet ended, while a new level-switch instruction is detected, indicating that a user hopes to present the final color-changing effect of the dimmable device with the level corresponding to the new level-switch instruction. In this case, the current level-switching and color-changing process is suspended by interrupting the charging or discharging operation, so that the device does not need to continue to change color according to the original level-switch instruction, which simplifies the interruption operation process and can further accelerate the color-changing rate of the device to improve the user experience.

Further, the second level-switch instruction carries a second target open-circuit voltage and a second target level. The step of interrupting the charging operation when the charging cut-off condition is not met but the second level-switch instruction is received or interrupting the discharging operation when the discharging cut-off condition is not met but the second level-switch instruction is received also includes: determining that the second target level is the current target level, and/or determining that the second target open-circuit voltage is the current target open-circuit voltage; calculating to determine a second target charge quantity based on the second target open-circuit voltage and the first current open-circuit voltage, obtaining the current accumulated charge quantity of the dimmable device, and determining whether to perform the charging operation or the discharging operation on the dimmable device according to a magnitude relationship between the accumulated charge quantity and the second target charge quantity; and controlling the dimmable device to perform the charging operation based on the charging condition, or controlling the dimmable device to perform the discharging operation based on the discharging condition.

The open-circuit voltage is a terminal voltage of the dimmable device in an open circuit or a disconnected state. Under normal circumstances, in the initial stage of the dimmable device forming the open circuit or the disconnected state, the terminal voltage of the dimmable device has not yet stabilized. If the terminal voltage detected at this time is used as the open-circuit voltage of the device, it is not accurate enough. Usually, after waiting for a specific time, such as 1 minute or 2 minutes, the terminal voltage of the device tends to stabilize. It is more accurate to use the terminal voltage detected after waiting for a specific time as the open-circuit voltage of the device. In this case, when the charging cut-off condition or the discharging cut-off condition is not met but the second level-switch instruction is received, the charging or discharging operation is interrupted (i.e., the interruption operation), and then the second target open-circuit voltage carried by the second level-switch instruction and the first current open-circuit voltage initially measured are directly used as the basis for calculating to determine a new target charge quantity. This allows the process to proceed to a new level-switching process according to the new target charge quantity, and continue to level-switch and change the color of the dimmable device. Thus, after the above interruption operation, there is no need to re-detect the current open-circuit voltage of the device. Instead, the first current open-circuit voltage initially measured is directly used as the basis for calculating the target charge quantity. This approach can effectively avoid the instability (inaccuracy) of the current open-circuit voltage detected immediately during the interruption operation, improving the accuracy of the target charge quantity calculation and consequently enhancing the accuracy of the level-switching and color-changing process of the dimmable device.

Further, after the charging operation is performed on the dimmable device based on the charging condition or after the discharging operation is performed on the dimmable device based on the discharging condition, the level-switch control method also includes a step of: stopping the charging operation when the charging cut-off condition is met, or stopping the discharging operation when the discharging cut-off condition is met. Therefore, the charging or discharging operation process of the dimmable device can be stopped in time according to the charging cut-off condition or the discharging cut-off condition to prevent the device from being over-charged or over-discharged, thereby the service life of the device can be prolonged.

Further, the charging condition includes at least one of the following conditions: a current charging current of the dimmable device is smaller than or equal to the maximum charging current, and a current charging voltage of the dimmable device is smaller than or equal to the maximum charging voltage. Optionally, the charging condition includes at least one of the following conditions: the current charging current of the dimmable device is smaller than or equal to a preset charging current, and the current charging voltage of the dimmable device is smaller than or equal to the maximum charging voltage. Optionally, the charging condition includes at least one of the following conditions: the current charging current of the dimmable device is smaller than or equal to the maximum charging current, and the current charging voltage of the dimmable device is smaller than or equal to a preset charging voltage.

In this case, the charging condition of the dimmable device can be set according to the actual requirements, such as controlling the charging current to be no greater than the preset charging current or the maximum charging current determined based on the temperature, controlling the charging voltage to be no greater than the preset charging voltage or the maximum charging voltage determined based on the temperature, etc., thereby the charging current or charging voltage of the dimmable device can be prevented from exceeding the maximum charging current or maximum charging voltage the dimmable device can withstand during the level-switching and color-changing process, avoiding damage to the dimmable device and prolonging the service life of the dimmable device. In particular, when the charging current or charging voltage of the dimmable device during the level-switching and color-changing process is limited to not greater than the maximum charging current or maximum charging voltage determined based on the temperature, etc., it can be further determined based on the current temperature of the dimmable device to charge the dimmable device at the maximum charging current or maximum charging voltage that the dimmable device can withstand at the current temperature, which can more effectively avoid damage to the dimmable device, and thus the service life of the dimmable device can be more effectively prolonged. Furthermore, the charging current may also be set to be equal to or close to (for example, slightly smaller than) the preset charging current or the maximum charging current determined based on the temperature. Or alternatively, the charging voltage may be set to be equal to or close to (for example, slightly smaller than) the preset charging voltage or the maximum charging voltage determined based on the temperature. Thereby, the level-switching and color-changing process of the dimmable device can be accelerated, which thus improves the color-changing rate of the dimmable device.

Further, the discharging condition includes at least one of the following conditions: a current discharging current of the dimmable device is smaller than or equal to the maximum discharging current, and a current discharging voltage of the dimmable device is smaller than or equal to the maximum discharging voltage. Optionally, the discharging condition includes at least one of the following conditions: the current discharging current of the dimmable device is smaller than or equal to a preset discharging current, and the current discharging voltage of the dimmable device is smaller than or equal to the maximum discharging voltage. Optionally, the discharging condition includes at least one of the following conditions: the current discharging current of the dimmable device is smaller than or equal to the maximum discharging current, and the current discharging voltage of the dimmable device is smaller than or equal to a preset discharging voltage.

In this case, the discharging condition of the dimmable device can also be set according to the actual requirements, such as controlling the discharging current to be not greater than the preset discharging current or the maximum discharging current determined based on the temperature, controlling the discharging voltage to be not greater than the preset discharging voltage or the maximum discharging voltage determined based on the temperature, etc., thereby it is possible to prevent the discharging current or discharging voltage of the dimmable device from exceeding the maximum discharging current or maximum discharging voltage that the dimmable device can withstand during the level-switching and color-changing process, avoiding damage to the dimmable device and prolonging the service life of the dimmable device. In particular, when the discharging current or discharging voltage of the dimmable device during the level-switching and color-changing process is limited to not greater than the maximum discharging current or maximum discharging voltage determined based on the temperature, etc., it may be further determined based on the current temperature of the dimmable device to discharging at the maximum discharging current or maximum discharging voltage that the dimmable device can withstand at the current temperature, which can more effectively avoid damage to the dimmable device, and thus the service life of the dimmable device can be more effectively prolonged. Furthermore, the discharging current may be set to be equal to or close to (for example, slightly smaller than) the preset discharging current or the maximum discharging current determined based on temperature. Or alternatively, the discharging voltage may be set to be equal to or close to (for example, slightly smaller than) a preset discharging voltage or a maximum discharging voltage determined based on temperature. Thereby, the level-switching and color-changing process of the dimmable device can be accelerated, which thus improves the color-changing rate of the dimmable device.

Further, the charging cut-off condition is determined based on the charging parameter, and the charging parameter includes at least one of the maximum charging voltage, the maximum charging current, the charging cut-off current and the charging cut-off duration. The charging cut-off condition includes at least one of the following conditions: a current charging current of the dimmable device is smaller than or equal to the charging cut-off current, the current accumulated charge quantity of the dimmable device is greater than the first target charge quantity or the second target charge quantity, and the current accumulated charging duration of the dimmable device is greater than or equal to the charging cut-off duration. Optionally, the charging cut-off condition includes at least one of the following conditions: the current charging current of the dimmable device is smaller than or equal to the charging cut-off current, the current accumulated charge quantity of the dimmable device is greater than the first target charge quantity or the second target charge quantity, and the current accumulated charging duration of the dimmable device is greater than or equal to a preset charging cut-off duration. Optionally, the charging cut-off condition includes at least one of the following conditions: the current charging current of the dimmable device is smaller than or equal to a preset charging cut-off current, the current accumulated charge quantity of the dimmable device is greater than the first target charge quantity or the second target charge quantity, and the current accumulated charging duration of the dimmable device is greater than or equal to the charging cut-off duration.

Thus, the charging cut-off condition of the dimmable device can be set according to the actual requirements, to stop the charging process in time and ensure the accuracy of level-switching and color-changing control of the dimmable device. Moreover, by determining the charging parameter according to the current temperature of the dimmable device, and further determining the charging cut-off condition according to the charging parameter, the method of determining the charging cut-off condition according to the current temperature of the dimmable device is realized, so that the effect of accurately regulating the dimmable device at different temperatures can be improved, and the accuracy of the dimmable device regulating the light beam intensity can be improved, thereby the user's experience is further improved. In addition, when the preset charging cut-off current is too large or the preset charging cut-off duration is too short, the dimmable device may prematurely terminate the charging process before actually reaching the color transition endpoint, as a result, the accuracy of level-switching and color-changing control of the dimmable device is reduced. Conversely, when the preset charging cut-off current is too small or the preset charging cut-off duration is too long, the dimmable device may continue charging even after reaching the color transition endpoint, which similarly diminishes the accuracy of level-switching and color-changing control of the dimmable device. Additionally, over-charging could potentially damage the device and shorten the device's service life. In this case, when the charging cut-off condition is limited to not greater than the charging cut-off current or charging cut-off duration determined based on the temperature, the charging cut-off current or charging cut-off duration required at the current temperature can be further determined based on the current temperature of the dimmable device, which can improve the accuracy of the level-switching and color-changing control of the dimmable device, and also can more effectively avoid damage to the device caused by over-charging. Thus, the service life of dimmable device can be more effectively prolonged.

Further, the discharging cut-off condition is determined based on the discharging parameter, and the discharging parameter includes at least one of the maximum discharging voltage, the maximum discharging current, the discharging cut-off current and the discharging cut-off duration. The discharging cut-off condition includes at least one of the following conditions: a current discharging current of the dimmable device is smaller than or equal to the discharging cut-off current, the current accumulated charge quantity of the dimmable device is smaller than the first target charge quantity or the second target charge quantity, and a current accumulated discharging duration of the dimmable device is greater than or equal to the discharging cut-off duration. Optionally, the discharging cut-off condition includes at least one of the following conditions: the current discharging current of the dimmable device is smaller than or equal to the discharging cut-off current, the current accumulated charge quantity of the dimmable device is smaller than the first target charge quantity or the second target charge quantity, and the current accumulated discharging duration of the dimmable device is greater than or equal to a preset discharging cut-off duration. Optionally, the discharging cut-off condition includes at least one of the following conditions: the current discharging current of the dimmable device is smaller than or equal to a preset discharging cut-off current, the current accumulated charge quantity of the dimmable device is smaller than the first target charge quantity or the second target charge quantity, and the current accumulated discharging duration of the dimmable device is greater than or equal to the discharging cut-off duration.

Thus, the discharging cut-off condition of the dimmable device can be set according to the actual requirements, to stop the discharging process in time and ensure the accuracy of the level-switching and color-changing control of the dimmable device. Moreover, by determining the discharging parameter according to the current temperature of the dimmable device, and further determining the discharging cut-off condition according to the discharging parameter, the method of determining the discharging cut-off condition according to the current temperature of the dimmable device is realized, so that the effect of accurately regulating the dimmable device at different temperatures can be improved, and the accuracy of the dimmable device regulating the light beam intensity can be improved, thereby the user's experience is further improved. In addition, when the preset discharging cut-off current is too large or the preset discharging cut-off duration is too short, the dimmable device may be caused to prematurely terminate the discharging process before actually reaching the color transition endpoint, as a result, the accuracy of level-switching color-changing control of the dimmable device is reduced. Conversely, when the preset discharging cut-off current is too small or the preset discharging cut-off duration is too long, it may result in the dimmable device having already reached the color transition endpoint without the discharging process being stopped, which similarly diminishes the accuracy of level-switching and color-changing control of the dimmable device. Additionally, over-charging could potentially damage the device and shorten the device's service life. In this case, when the discharging cut-off condition is limited to not greater than the discharging cut-off current or discharging cut-off duration determined based on the temperature, the discharging cut-off current or discharging cut-off duration required at the current temperature can be further determined based on the current temperature of the dimmable device, which can improve the accuracy of the level-switching and color-changing control of the dimmable device, and more effectively avoid damage to the device caused by over-discharging. Thus, the service life of dimmable device can be more effectively prolonged.

Further, after the charging operation is stopped when the charging cut-off condition is met, or after the discharging operation is stopped when the discharging cut-off condition is met, the level-switch control method also includes a step of: sending a first-stage level-switch completion signal. Thus, the first-stage level-switch completion signal can be transmitted to a signal transceiver (such as the terminal platform) in time to trigger the subsequent regulation steps of the dimmable device.

Further, after stopping the charging operation when the charging cut-off condition is met, or stopping the discharging operation when the discharging cut-off condition is met, the level-switch control method also includes steps of: leaving the dimmable device still and recording a rest duration; and sending a second-stage level-switch completion signal when the rest duration reaches a preset rest duration.

Further, after the charging operation is stopped when the charging cut-off condition is met, or after the discharging operation is stopped when the discharging cut-off condition is met, the level-switch control method also includes steps of: leaving the dimmable device still and recording a rest duration; reading a third target open-circuit voltage and a third target level corresponding to a third level-switch instruction when the rest duration does not reach the preset rest duration and the third level-switch instruction is received; determining that the third target level is the current target level, and/or determining that the third target open-circuit voltage is the current target open-circuit voltage; calculating to determine a third target charge quantity based on the third target open-circuit voltage and the first current open-circuit voltage, obtaining the current accumulated charge quantity of the dimmable device, and determining to perform the charging operation or the discharging operation on the dimmable device according to a magnitude relationship between the accumulated charge quantity and the third target charge quantity.

As described above, in the initial stage when the dimmable device forms an open circuit or a disconnected state, the detected open-circuit voltage is unstable (i.e., inaccurate). In this case, after stopping the charging or discharging operation, the dimmable device is allowed to wait for the preset rest duration before sending the second-stage level-switch completion signal, i.e., sending the signal indicating the end of the level-switching and color-changing process to the signal transceiver (such as the terminal platform). Thereafter, if a new level-switch instruction is received, the aforementioned level-switching control process may be performed again, that is, the current open-circuit voltage is re-detected, and the detected open-circuit voltage at this time is also more accurate and stable. If the third level-switch instruction is received within the preset rest duration, then similar to the above-mentioned interruption operation, in this case, a new target charge quantity is calculated and determined based on the third target open-circuit voltage carried by the received third level-switch instruction and the initially measured first current open-circuit voltage. This allows the process to proceed to a new level-switch process according to the new target charge quantity, and continue to level-switch and change the color of the dimmable device. Therefore, in the above process, when the third level-switch instruction is received within the preset rest duration, there is no need to re-detect the current open-circuit voltage of the device. Instead, the initially measured first current open-circuit voltage is directly used as the basis for calculating the target charge quantity. This effectively avoids the instability (i.e., inaccuracy) of the detected current open-circuit voltage caused by insufficient rest duration of the device which leads to unstable terminal voltage. Consequently, the accuracy of the target charge quantity calculation is enhanced, and thus the accuracy of the level-switching and color-changing process of the dimmable device is improved.

Optionally, the step of determining to perform the charging operation or the discharging operation on the dimmable device according to the magnitude relationship between the accumulated charge quantity and the first target charge quantity, or determining to perform the charging operation or the discharging operation on the dimmable device according to the magnitude relationship between the accumulated charge quantity and the second target charge quantity, or determining to perform the charging operation or the discharging operation on the dimmable device according to the magnitude relationship between the accumulated charge quantity and the third target charge quantity includes the following: determining the magnitude relationship between the accumulated charge quantity and the first target charge quantity, the second target charge quantity, or the third target charge quantity; determining to perform the charging operation on the dimmable device when the accumulated charge quantity is smaller than the first target charge quantity, the second target charge quantity, or the third target charge quantity; determining to perform the discharging operation on the dimmable device when the accumulated charge quantity is greater than the first target charge quantity, the second target charge quantity, or the third target charge quantity; and determining to perform the charging operation or the discharging operation on the dimmable device when the accumulated charge quantity is equal to the first target charge quantity, the second target charge quantity, or the third target charge quantity. Thus, when the first level-switch instruction is received, it is possible to directly determine whether to perform the charging operation or the discharging operation on the dimmable device by comparing the current accumulated charge quantity and the first target charge quantity. Or alternatively, when the second level-switch instruction is received, it is possible to directly determine whether to perform the charging operation or the discharging operation on the dimmable device by comparing the current accumulated charge quantity and the first target charge quantity. Or alternatively, when the third level-switch instruction is received, it is possible to directly determine whether to perform the charging operation or the discharging operation on the dimmable device by comparing the current accumulated charge quantity and the third target charge quantity, without having to perform a complicated calculation process (for example, calculating a difference between the accumulated charge quantity and the target charge quantity, and then determining whether to perform the charging operation or the discharging operation on the dimmable device according to the difference.) This simplifies the level-switching control process of the dimmable device, which is conducive to improving the color-changing rate of the dimmable device.

Further, the step of sending the second-stage level-switch completion signal when the rest duration reaches the preset rest duration includes steps of: determining whether the current target level is a lowest level or a highest level when the rest duration reaches the preset rest duration; and sending the second-stage level-switch completion signal when the current target level is the lowest level or the highest level.

Further, the step of sending the second-stage level-switch completion signal when the rest duration reaches the preset rest duration includes steps of: determining whether the current target level is a lowest level or a highest level when the rest duration reaches the preset rest duration; obtaining a second current open-circuit voltage of the dimmable device when the current target level is neither the lowest level nor the highest level; calculating to determine a first voltage difference between the second current open-circuit voltage and the current target open-circuit voltage; and sending the second-stage level-switch completion signal when the first voltage difference is in the preset voltage error range.

Further, the step of sending the second-stage level-switch completion signal when the rest duration reaches the preset rest duration includes steps of: determining whether the current target level is a lowest level or a highest level when the rest duration reaches the preset rest duration; obtaining a second current open-circuit voltage of the dimmable device when the current target level is neither the lowest level nor the highest level; calculating to determine a first voltage difference between the second current open-circuit voltage and the current target open-circuit voltage; and performing a charging correction or a discharging correction on the dimmable device when the first voltage difference is not in the preset voltage error range.

Further, after performing the charging correction or the discharging correction on the dimmable device when the first voltage difference is not in the preset voltage error range, the level-switch control method also includes steps of: obtaining a third current open-circuit voltage of the dimmable device; calculating to determine a second voltage difference between the third current open-circuit voltage and the current target open-circuit voltage, which is in the preset voltage error range, and the second-stage level-switch completion signal is sent.

Under normal circumstances, the lowest level and the highest level of the dimmable device correspond to the dimmable device's fully-discharged and fully-charged states respectively. The level-switching and color-changing results at this time are most in line with the user's expectations, that is, an error between the actual color-changing effect of the device and the color-changing effect expected by the user is small is small. Thus, after the level-switching is completed, if the current level of the dimmable device corresponds to the lowest level or the highest level, then the second-stage level-switch completion signal can be directly sent to the signal transceiver (such as the terminal platform) to end the level-switching and color-changing process. If, after the level-switching is completed, the current level of the dimmable device is not the lowest level or the highest level, for example, the current level is an intermediate level other than the lowest level and the highest level, then the color-changing effect of the intermediate level may not meet the user's expectations. For example, an error between the actual color-changing effect of the device and the color-changing effect expected by the user is large. Thus, it is required, after the level-switching is completed, to further determine the error between the actual color-changing effect of the device and the color-changing effect expected by the user based on the voltage difference between the current open-circuit voltage and the target open-circuit voltage. If the voltage difference is in the preset voltage error range, it is considered that the error between the two is small and can meet the user's expectations. Then, the second-stage level-switch completion signal is sent to the signal transceiver (such as a terminal platform) to terminate the level-switching and color-changing process. If the voltage difference is not in the preset voltage error range, that is, the voltage difference lies outside the preset voltage error range, then it is required to correct the dimmable device, such as through the charging correction or the discharging correction. By applying these corrections, the device's current open-circuit voltage is changed and obtained, for example, through a detection of the third current open-circuit voltage, until the voltage difference between the corrected third current open-circuit voltage and the target open-circuit voltage is in the preset voltage error range, the second-stage level-switch completion signal is sent to the signal transceiver (such as the terminal platform) to conclude the level-switching and color-changing process. In this way, the accuracy of the level-switching and color-changing process of the dimmable device can be improved, thereby the user experience is improved.

In accordance with a second aspect of the present disclosure, a level-switch control apparatus for a dimmable device is provided. The level-switch control apparatus includes: a receiver, a sampler, a processor and a driver. The receiver is configured to receive a first level-switch instruction. The first level-switch instruction carries a first target open-circuit voltage. The sampler is configured to obtain a first current open-circuit voltage and a current temperature of the dimmable device. The processor is configured to determine a charging parameter or a discharging parameter applied to the dimmable device based on the current temperature, and determine a charging condition applied to the dimmable device based on the charging parameter or determine a discharging condition applied to the dimmable device based on the discharging parameter; and to calculate to determine a first target charge quantity based on the first target open-circuit voltage and the first current open-circuit voltage, obtain a current accumulated charge quantity of the dimmable device, and determine to perform a charging operation or a discharging operation on the dimmable device according to a magnitude relationship between the accumulated charge quantity and the first target charge quantity. The driver is configured to control based on the charging condition to perform a charging operation on the dimmable device, or to control based on the discharging condition to perform a discharging operation on the dimmable device.

In the second aspect of the present disclosure, the current temperature of the dimmable device is obtained by a sampler, and the processor determines the charging parameter or the discharging parameter applied to the dimmable device based on the current temperature, and further determines the charging condition adopted when the dimmable device is charged based on the charging parameter, or determines the discharging condition adopted when the dimmable device is discharged based on the discharging parameter. That is, the impact of temperature on the color-changing process (charging operation or discharging operation) of the dimmable device is taken into consideration, and the charging condition or the discharging condition is determined according to the current temperature of the dimmable device, so that a more effective level-switching control of the dimmable device at different temperatures is achieved. Thereby the color-changing reliability of the dimmable device can be more effectively enhanced and the user experience is improved.

Further, the processor is specifically configured to: determine a temperature range corresponding to the current temperature; determine the charging parameter or the discharging parameter applied to the dimmable device according to the temperature range and a corresponding relationship between the temperature range and the charging parameter or the discharging parameter. Thus, the corresponding charging parameter or discharging parameter in different temperature ranges can be pre-set in the processor. When the detected current temperature falls into a corresponding temperature range, the charging parameter or the discharging parameter corresponding to the temperature range can be directly read. This simplifies the determination process of the charging parameter and the discharging parameter, which is conducive to accelerating the level-switching control process of the dimmable device and improving the color-changing rate of the dimmable device.

Further, the processor is specifically configured to: determine a temperature range corresponding to the current temperature; determine a transmittance variation range of the dimmable device based on the temperature range and a corresponding relationship between the temperature range and the transmittance variation range; determine the charging parameter or the discharging parameter applied to the dimmable device according to the transmittance variation range and a corresponding relationship between the transmittance variation range and the charging parameter or the discharging parameter. In this case, considering the impact of temperature on the transmittance variation range of the dimmable device, the processor determines different transmittance variation ranges corresponding to different temperature ranges, and then determines the charging parameter or the discharging parameter according to the transmittance variation range. Thereby, when the dimmable device is controlled (charged or discharged) using the charging parameter or the discharging parameter determined in the above manner, the transmittance variation result of the dimmable device can be made more reliable, thus the user experience is improved.

Further, the charging parameter includes at least one of a maximum charging voltage, a maximum charging current, a charging cut-off current and a charging cut-off duration. Or alternatively, the discharging parameter includes at least one of a maximum discharging voltage, a maximum discharging current, a discharging cut-off current and a discharging cut-off duration. For the dimmable device, under different temperatures, when the same voltage or current is applied to perform the level-switching control, the color-changing rate of the dimmable device may be different, and under different temperatures, the maximum operating voltage and maximum operating current that the dimmable device can withstand may also be different. Thus, during the level-switching control process, the influence of temperature is taken into consideration, and the charging parameter and/or the discharging parameter of the dimmable device is(are) determined based on the temperature. That is, at least one of the maximum charging voltage, the maximum charging current, the charging cut-off current, the charging cut-off duration, the maximum discharging voltage, the maximum discharging current, the discharging cut-off current and the discharging cut-off duration of the dimmable device is determined based on the temperature, so that the color-changing rate of the dimmable device can be more effectively improved or the service life of the dimmable device can be prolonged, among other benefits, to enhance the color-changing reliability and ultimately improve the user experience.

Further, the first level-switch instruction also carries a first target level, and the processor is also configured to: determine the first target level as the current target level, and/or determine the first target open-circuit voltage as the current target open-circuit voltage.

Further, the driver is also configured to: interrupt the charging operation when the charging cut-off condition is not met but a second level-switch instruction is received; or alternatively, interrupt the discharging operation when the discharging cut-off condition is not met but the second level-switch instruction is received. Thus, when the charging cut-off condition or the discharging cut-off condition is not met, that is, in a case where a level-switching process of the dimmable device has not yet ended, while a new level-switch instruction is detected, indicating that a user hopes to present the final color-changing effect of the dimmable device with the level corresponding to the new level-switch instruction. In this case, the driver suspends the current level-switching and color-changing process by interrupting the charging or discharging operation, so that the device does not need to continue to change color according to the original level-switch instruction, which simplifies the interruption operation process and can further accelerate the color-changing rate of the device to enhance the user experience.

Further, the second level-switch instruction carries a second target open-circuit voltage and a second target level, and the processor is also configured to: determine that the second target level is the current target level, and/or determine that the second target open-circuit voltage is the current target open-circuit voltage; calculate to determine a second target charge quantity based on the second target open-circuit voltage and the first current open-circuit voltage, obtain the current accumulated charge quantity of the dimmable device, and determine to perform the charging operation or the discharging operation on the dimmable device according to a magnitude relationship between the accumulated charge quantity and the second target charge quantity.

The open-circuit voltage is a terminal voltage of the dimmable device in an open circuit or a disconnected state. Under normal circumstances, in the initial stage of the dimmable device forming the open circuit or the disconnected state, the terminal voltage of the dimmable device has not yet stabilized. If the terminal voltage detected at this time is used as the open-circuit voltage of the device, it is not accurate enough. Usually, after waiting for a specific time, such as 1 minute (1 min) or 2 minutes (2 min), the terminal voltage of the device tends to be stable. It is more accurate to use the terminal voltage detected after waiting for a specific time as the open-circuit voltage of the device. In this case, when the charging cut-off condition or the discharging cut-off condition is not met but the second level-switch instruction is received, after the driver interrupts the charging or discharging operation (i.e., the interruption operation), the processor directly calculates to determine the new target charge quantity based on the second target open-circuit voltage carried by the second level-switch instruction and the first current open-circuit voltage initially measured. This allows the process to proceed to a new level-switching process according to the new target charge quantity, and continue to level-switch and change the color of the dimmable device. Thus, after the above interruption operation, there is no need to re-detect the current open-circuit voltage of the device. Instead, the first current open-circuit voltage initially measured is directly used as the basis for calculating the target charge quantity. This approach can effectively avoid the instability (inaccuracy) of the current open-circuit voltage detected immediately during the interruption operation, improving the accuracy of the target charge quantity calculation and consequently enhancing the accuracy of the level-switching and color-changing process of the dimmable device.

Further, the driver is also configured to: stop the charging operation when the charging cut-off condition is met, or stop the discharging operation when the discharging cut-off condition is met. Therefore, the driver can stop the charging or discharging operation process of the dimmable device in time according to the charging cut-off condition or the discharging cut-off condition, to prevent the device from being over-charged or over-discharged, thereby the service life of the device can be prolonged.

Further, the charging condition includes at least one of the following conditions: a current charging current of the dimmable device is smaller than or equal to the maximum charging current, and a current charging voltage of the dimmable device is smaller than or equal to the maximum charging voltage. Optionally, the charging condition includes at least one of the following conditions: the current charging current of the dimmable device is smaller than or equal to a preset charging current, and the current charging voltage of the dimmable device is smaller than or equal to the maximum charging voltage. Optionally, the charging condition includes at least one of the following conditions: the current charging current of the dimmable device is smaller than or equal to the maximum charging current, and the current charging voltage of the dimmable device is smaller than or equal to a preset charging voltage.

In this case, the charging condition of the dimmable device can be set according to the actual requirements, such as controlling the charging current to be not greater than the preset charging current or the maximum charging current determined based on the temperature, controlling the charging voltage to be not greater than the preset charging voltage or the maximum charging voltage determined based on the temperature, etc., thereby the charging current or charging voltage of the dimmable device can be prevented from exceeding the maximum charging current or maximum charging voltage the dimmable device can withstand during the level-switching and color-changing process, avoiding damage to the dimmable device and prolonging the service life of the dimmable device. In particular, when the charging current or charging voltage of the dimmable device during the level-switching and color-changing process is limited to not greater than the maximum charging current or maximum charging voltage determined based on the temperature, etc., it can be further determined based on the current temperature of the dimmable device to charge the dimmable device at the maximum charging current or maximum charging voltage that the dimmable device can withstand at the current temperature, which can more effectively avoid damage to the dimmable device, and thus the service life of the dimmable device can be more effectively prolonged. Furthermore, the charging current may also be set to be equal to or close to (for example, slightly smaller than) the preset charging current or the maximum charging current determined based on the temperature. Or alternatively, the charging voltage may be set to be equal to or close to (for example, slightly smaller than) the preset charging voltage or the maximum charging voltage determined based on the temperature. Thereby, the level-switching and color-changing process of the dimmable device can be accelerated, which thus improves the color-changing rate of the dimmable device.

Further, the discharging condition includes at least one of the following conditions: a current discharging current of the dimmable device is smaller than or equal to the maximum discharging current, and a current discharging voltage of the dimmable device is smaller than or equal to the maximum discharging voltage. Optionally, the discharging condition includes at least one of the following conditions: the current discharging current of the dimmable device is smaller than or equal to a preset discharging current, and the current discharging voltage of the dimmable device is smaller than or equal to the maximum discharging voltage. Optionally, the discharging condition includes at least one of the following conditions: the current discharging current of the dimmable device is smaller than or equal to the maximum discharging current, and the current discharging voltage of the dimmable device is smaller than or equal to a preset discharging voltage.

In this case, the discharging condition of the dimmable device can also be set according to the actual requirements, such as controlling the discharging current not to be greater than the preset discharging current or the maximum discharging current determined based on the temperature, controlling the discharging voltage not to be greater than the preset discharging voltage or the maximum discharging voltage determined based on the temperature, etc., thereby it is possible to prevent the discharging current or discharging voltage of the dimmable device from exceeding the maximum discharging current or maximum discharging voltage that the dimmable device can withstand during the level-switching and color-changing process, avoiding damage to the dimmable device and prolonging the service life of the dimmable device. In particular, when the discharging current or discharging voltage of the dimmable device during the level-switching and color-changing process is limited to not greater than the maximum discharging current or maximum discharging voltage determined based on the temperature, etc., it may be further determined based on the current temperature of the dimmable device to discharging at the maximum discharging current or maximum discharging voltage that the dimmable device can withstand at the current temperature, which can more effectively avoid damage to the dimmable device, and thus the service life of the dimmable device can be more effectively prolonged. Furthermore, the discharging current may be set to be equal to or close to (for example, slightly smaller than) the preset discharging current or the maximum discharging current determined based on temperature. Or alternatively, the discharging voltage may be set to be equal to or close to (for example, slightly smaller than) the preset discharging voltage or the maximum discharging voltage determined based on temperature. Thereby, the level-switching and color-changing process of the dimmable device can be accelerated, which thus improves the color-changing rate of the dimmable device.

Further, the charging cut-off condition is determined based on the charging parameter, and the charging parameter includes at least one of the maximum charging voltage, the maximum charging current, the charging cut-off current and the charging cut-off duration. The charging cut-off condition includes at least one of the following conditions: a current charging current of the dimmable device is smaller than or equal to the charging cut-off current, the current accumulated charge quantity of the dimmable device is greater than the first target charge quantity or the second target charge quantity, and a current accumulated charging duration of the dimmable device is greater than or equal to the charging cut-off duration. Optionally, the charging cut-off condition includes at least one of the following conditions: the current charging current of the dimmable device is smaller than or equal to the charging cut-off current, the current accumulated charge quantity of the dimmable device is greater than the first target charge quantity or the second target charge quantity, and the current accumulated charging duration of the dimmable device is greater than or equal to a preset charging cut-off duration. Optionally, the charging cut-off condition includes at least one of the following conditions: the current charging current of the dimmable device is smaller than or equal to a preset charging cut-off current, the current accumulated charge quantity of the dimmable device is greater than the first target charge quantity or the second target charge quantity, and the current accumulated charging duration of the dimmable device is greater than or equal to the charging cut-off duration.

Thus, the charging cut-off condition of the dimmable device can be set according to the actual requirements, to stop the charging process in time and ensure the accuracy of level-switching and color-changing control of the dimmable device. Moreover, by determining the charging parameter according to the current temperature of the dimmable device, and further determining the charging cut-off condition according to the charging parameter, the method of determining the charging cut-off condition according to the current temperature of the dimmable device is realized, so that the effect of accurately regulating the dimmable device at different temperatures can be improved, and the accuracy of the dimmable device regulating the light beam intensity can be improved, thereby the user's experience is further improved. In addition, when the preset charging cut-off current is too large or the preset charging cut-off duration is too short, the dimmable device may prematurely terminate the charging process before actually reaching the color transition endpoint, as a result, the accuracy of level-switching and color-changing control of the dimmable device is reduced. Conversely, when the preset charging cut-off current is too small or the preset charging cut-off duration is too long, the dimmable device may continue charging even after reaching the color transition endpoint, which similarly diminishes the accuracy of level-switching and color-changing control of the dimmable device. Additionally, over-charging could potentially damage the device and shorten the device's service life. In this case, when the charging cut-off condition is limited to not greater than the charging cut-off current or charging cut-off duration determined based on the temperature, the charging cut-off current or charging cut-off duration required at the current temperature can be further determined based on the current temperature of the dimmable device, which can improve the accuracy of the level-switching and color-changing control of the dimmable device, and also can more effectively avoid damage to the device caused by over-charging. Thus, the service life of the dimmable device can be more effectively prolonged.

Further, the discharging cut-off condition is determined based on the discharging parameter, and the discharging parameter includes at least one of the maximum discharging voltage, the maximum discharging current, the discharging cut-off current and the discharging cut-off duration. The discharging cut-off condition includes at least one of the following conditions: a current discharging current of the dimmable device is smaller than or equal to the discharging cut-off current, the current accumulated charge quantity of the dimmable device is smaller than the first target charge quantity or the second target charge quantity, and a current accumulated discharging duration of the dimmable device is greater than or equal to the discharging cut-off duration. Optionally, the discharging cut-off condition includes at least one of the following conditions: the current discharging current of the dimmable device is smaller than or equal to the discharging cut-off current, the current accumulated charge quantity of the dimmable device is smaller than the first target charge quantity or the second target charge quantity, and the current accumulated discharging duration of the dimmable device is greater than or equal to a preset discharging cut-off duration. Optionally, the discharging cut-off condition includes at least one of the following conditions: the current discharging current of the dimmable device is smaller than or equal to a preset discharging cut-off current, the current accumulated charge quantity of the dimmable device is smaller than the first target charge quantity or the second target charge quantity, and the current accumulated discharging duration of the dimmable device is greater than or equal to the discharging cut-off duration.

Thus, the discharging cut-off condition of the dimmable device can be set according to the actual requirements, to stop the discharging process in time and ensure the accuracy of the level-switching and color-changing control of the dimmable device. Moreover, by determining the discharging parameter according to the current temperature of the dimmable device, and further determining the discharging cut-off condition according to the discharging parameter, the method of determining the discharging cut-off condition according to the current temperature of the dimmable device is realized, so that the effect of accurately regulating the dimmable device at different temperatures can be improved, and the accuracy of the dimmable device regulating the light beam intensity can be improved, thereby the user's experience is further improved. In addition, when the preset discharging cut-off current is too large or the preset discharging cut-off duration is too short, the dimmable device may be caused to prematurely terminate the discharging process before actually reaching the color transition endpoint, as a result, the accuracy of level-switching color-changing control of the dimmable device is reduced. Conversely, when the preset discharging cut-off current is too small or the preset discharging cut-off duration is too long, it may result in the dimmable device having already reached the color transition endpoint without the discharging process being stopped, which similarly diminishes the accuracy of level-switching and color-changing control of the dimmable device. Additionally, over-charging could potentially damage the device and shorten the device's service life. In this case, when the discharging cut-off condition is limited to not greater than the discharging cut-off current or discharging cut-off duration determined based on the temperature, the discharging cut-off current or discharging cut-off duration required at the current temperature can be further determined based on the current temperature of the dimmable device, which can improve the accuracy of the level-switching and color-changing control of the dimmable device, and more effectively avoid damage to the device caused by over-discharging. Thus, the service life of dimmable device can be more effectively prolonged.

Further, the level-switch control apparatus also includes a transmitter, which is configured to send a first-stage level-switch completion signal. Thus, the transmitter can timely transmit the first-stage level-switch completion signal to a signal transceiver (such as the terminal platform) to trigger the subsequent control steps of the dimmable device.

Further, the processor is also configured to leave the dimmable device to rest and record a rest duration. The level-switch control apparatus also includes a transmitter, which is also configured to send a second-stage level-switch completion signal when the rest duration reaches a preset rest duration.

Further, the processor is also configured to: leave the dimmable device to rest and record a rest duration; read a third target open-circuit voltage and a third target level corresponding to a third level-switch instruction when the rest duration does not reach the preset rest duration and the third level-switch instruction is received; determine that the third target level is the current target level, and/or determine that the third target open-circuit voltage is the current target open-circuit voltage; calculate to determine a third target charge quantity based on the third target open-circuit voltage and the first current open-circuit voltage, obtain the current accumulated charge quantity of the dimmable device, and determine whether to perform the charging operation or the discharging operation on the dimmable device according to a magnitude relationship between the accumulated charge quantity and the third target charge quantity.

As described above, in the initial stage when the dimmable device forms an open circuit or a disconnected state, the detected open-circuit voltage is unstable (inaccurate). In this case, after stopping the charging or discharging operation, the dimmable device is allowed to wait for the preset rest duration before sending the second-stage level-switch completion signal, i.e., sending the signal indicating the end of the level-switching and color-changing process to the signal transceiver (such as the terminal platform). Thereafter, if a new level-switch instruction is received, the aforementioned level-switching control process may be performed again, that is, the current open-circuit voltage is re-detected, and the detected open-circuit voltage at this time is also more accurate and stable. If the third level-switch instruction is received within the preset rest duration, then similar to the above-mentioned interruption operation, in this case, a new target charge quantity is calculated and determined based on the third target open-circuit voltage carried by the received third level-switch instruction and the initially measured first current open-circuit voltage. This allows the process to proceed to a new level-switch process according to the new target charge quantity, and continue to level-switch and change the color of the dimmable device. Therefore, in the above process, when the third level-switch instruction is received within the preset rest duration, there is no need to re-detect the current open-circuit voltage of the device. Instead, the initially measured first current open-circuit voltage is directly used as the basis for calculating the target charge quantity. This effectively avoids the instability (inaccuracy) of the detected current open-circuit voltage caused by insufficient rest duration of the device which leads to unstable terminal voltage. Consequently, the accuracy of the target charge quantity calculation is enhanced, and thus the accuracy of the level-switching and color-changing process of the dimmable device is improved.

Optionally, the processor is also configured to: determine the magnitude relationship between the accumulated charge quantity and the first target charge quantity, the second target charge quantity, or the third target charge quantity; determine to perform the charging operation on the dimmable device when the accumulated charge quantity is smaller than the first target charge quantity, the second target charge quantity, or the third target charge quantity; determine to perform the discharging operation on the dimmable device when the accumulated charge quantity is greater than the first target charge quantity, the second target charge quantity, or the third target charge quantity; and determine to perform the charging operation or the discharging operation on the dimmable device when the accumulated charge quantity is equal to the first target charge quantity, the second target charge quantity, or the third target charge quantity. Thus, the processor can directly compare the current accumulated charge quantity and the first target charge quantity when the first level-switch instruction is received, or directly compare the current accumulated charge quantity and the second target charge quantity when the second level-switch instruction is received, or directly compare the current accumulated charge quantity and the third target charge quantity when the third level-switch instruction is received, to determine whether to perform the charging operation or the discharging operation on the dimmable device, without having to perform a complicated calculation process (for example, calculating a difference between the accumulated charge quantity and the target charge quantity, and then determining whether to perform the charging operation or the discharging operation on the dimmable device according to the difference.) This simplifies the level-switching control process of the dimmable device, which is conducive to improving the color-changing rate of the dimmable device.

Further, the processor is also configured to: determine whether the current target level is a lowest level or a highest level when the rest duration reaches the preset rest duration. The transmitter is also configured to: send a second-stage level-switch completion signal when the current target level is the lowest level or the highest level.

Further, the processor is also configured to: determine whether the current target level is a lowest level or a highest level when the rest duration reaches the preset rest duration. The sampler is also configured to: obtain a second current open-circuit voltage of the dimmable device when the current target level is neither the lowest level nor the highest level. The processor is also configured to: calculate to determine a first voltage difference between the second current open-circuit voltage and the current target open-circuit voltage. The transmitter is also configured to: send the second-stage level-switch completion signal when the first voltage difference is in the preset voltage error range.

Further, the processor is also configured to: determine whether the current target level is a lowest level or a highest level when the rest duration reaches the preset rest duration. The sampler is also configured to: obtain a second current open-circuit voltage of the dimmable device when the current target level is neither the lowest level nor the highest level. The processor is also configured to: calculate to determine a first voltage difference between the second current open-circuit voltage and the current target open-circuit voltage. The driver is also configured to perform a charging correction or a discharging correction on the dimmable device when the first voltage difference is not in the preset voltage error range.

Further, the sampler is also configured to obtain a third current open-circuit voltage of the dimmable device; the processor is also configured to calculate to determine a second voltage difference between the third current open-circuit voltage and the current target open-circuit voltage. The transmitter is also configured to send the second-stage level-switch completion signal when the second voltage difference is in the preset voltage error range.

Under normal circumstances, the lowest level and the highest level of the dimmable device correspond to the dimmable device's fully-discharged and fully-charged states respectively. The level-switching and color-changing results at this time are most in line with the user's expectations, that is, an error between the actual color-changing effect of the device and the color-changing effect expected by the user is small. Thus, after the level-switching is completed, if the current level of the dimmable device corresponds to the lowest level or the highest level, then the second-stage level-switch completion signal can be directly sent to the signal transceiver (such as the terminal platform) to end the level-switching and color-changing process. If, after the level-switching is completed, the current level of the dimmable device is not the lowest level or the highest level, for example, the current level is an intermediate level other than the lowest level and the highest level, then the color-changing effect of the intermediate level may not meet the user's expectations. For example, an error between the actual color-changing effect of the device and the color-changing effect expected by the user is large. Thus, it is required, after the level-switching is completed, to further determine the error between the actual color-changing effect of the device and the color-changing effect expected by the user based on the voltage difference between the current open-circuit voltage and the target open-circuit voltage. If the voltage difference is in the preset voltage error range, it is considered that the error between the two is small and can meet the user's expectations. Then, the second-stage level-switch completion signal is sent to the signal transceiver (such as a terminal platform) to terminate the level-switching and color-changing process. If the voltage difference is not in the preset voltage error range, that is, the voltage difference lies outside the preset voltage error range, then it is required to correct the dimmable device, such as through the charging correction or the discharging correction. By applying these corrections, the device's current open-circuit voltage is changed and obtained, for example, through a detection of the third current open-circuit voltage, until the voltage difference between the corrected third current open-circuit voltage and the target open-circuit voltage is in the preset voltage error range, the second-stage level-switch completion signal is sent to the signal transceiver (such as the terminal platform) to conclude the level-switching and color-changing process. In this way, the accuracy of the level-switching and color-changing process of the dimmable device can be improved, thereby the user experience is improved.

In accordance with a third aspect of the present disclosure, a computer-readable storage medium is provided, on which a computer program is stored. The computer program when executed by a processor, causes the level-switch control method for the dimmable device as described above to be implemented.

In accordance with a fourth aspect of the present disclosure, a level-switch control system for a dimmable device is provided. The level-switch control system includes a terminal platform and the level-switch control apparatus for the dimmable device as described above, and an information interaction is performed between the terminal platform and the level-switch control apparatus for the dimmable device.

### DESCRIPTION OF THE DRAWINGS

To provide a clear illustration of the technical schemes of the present disclosure, the accompanying drawings required for describing the specific embodiments will be briefly introduced below. The drawings in the following description are merely some embodiments of the present disclosure. For a person of ordinary skill in the art, other drawings may be derived from these illustrations without creative effort.
FIG. 1 is a schematic block diagram of a level-switch control apparatus for a dimmable device provided in an embodiment of the present disclosure;
FIG. 2 is a schematic block diagram of a level-switch control system for a dimmable device provided in an embodiment of the present disclosure;
FIG. 3 is a schematic flow chart of a level-switch control method for a dimmable device provided in an embodiment of the present disclosure;
FIG. 4 is an exemplary flow chart of step S315 in FIG. 3;
FIG. 5 is another schematic flow chart of a level-switch control method for a dimmable device provided in an embodiment of the present disclosure; and
FIG. 6 is a schematic block diagram of a computer-readable storage medium and a computing processor provided in an embodiment of the present disclosure.

### DETAILED DESCRIPTION OF THE EMBODIMENTS

In order to make the technical problems to be solved, technical schemes, and beneficial effects of the present disclosure clearer and more comprehensible, the following provides a further detailed explanation of the present disclosure in conjunction with embodiments. It should be understood that the specific embodiments described herein are merely intended to illustrate the present disclosure and are not intended to limit the present disclosure.

The terms that may appear in the embodiments of the present disclosure are explained below.

In the embodiments of the present disclosure, the term "and/or" describes the association relationship of the associated objects, indicating that there may be three relationships. For example, A and/or B can represent: A exists alone, A and B exist at the same time, and B exists alone. A and B may be singular or plural. The character "/" generally indicates that the associated objects before and after are in an "or" relationship.

In the embodiments of the present disclosure, the expression "at least one" refers to one or more, and the term "multiple" refers to two or more. The expression of "at least one of..." or similar expressions refers to any combination of these items, including any combination of a single item or multiple items. For example, "selected from at least one of a, b, or c," or "selected from at least one of a, b, and c," can both represent: a, b, c, a-b (i.e., a and b), a-c, b-c, or a-b-c, where a, b, and c can each be a single item or multiple items.

In the embodiments of the present disclosure, terms such as "first," "second," "third," and similar expressions are used solely for descriptive purposes to distinguish objects such as substances from one another, and should not be construed as indicating or implying relative importance or implicitly specifying the quantity of the indicated technical features. For example, without departing from the scope of the embodiments of the present disclosure, the first XX may also be referred to as the second XX, and similarly, the second XX may also be referred to as the first XX. Thus, the features defined as "first", "second", "third" may explicitly or implicitly include one or more of such features.

In the embodiments of the present disclosure, the terms "include," "have," and their cognates are intended solely to indicate specific features, numbers, steps, operations, elements, components or combinations of the foregoing, and should not be understood as first excluding the existence of one or more other features, numbers, steps, operations, elements, components or combinations of the foregoing or the possibility of adding one or more features, numbers, steps, operations, elements, components or combinations of the foregoing.

In the embodiments of the present disclosure, the term "rest" refers to a situation where the dimmable device is not undergoing a charging or discharging process, that is, no voltage or current is applied to the dimmable device.

It should be understood that in various embodiments of the present disclosure, the numerical order of processes does not imply a sequence of execution. Some or all steps may be performed in parallel or in sequence, and the execution sequence of each process should be determined by its function and internal logic, which shall not impose any limitation on the implementation process of the embodiments of the present disclosure.

The embodiments of the present disclosure will now be described with reference to the drawings.

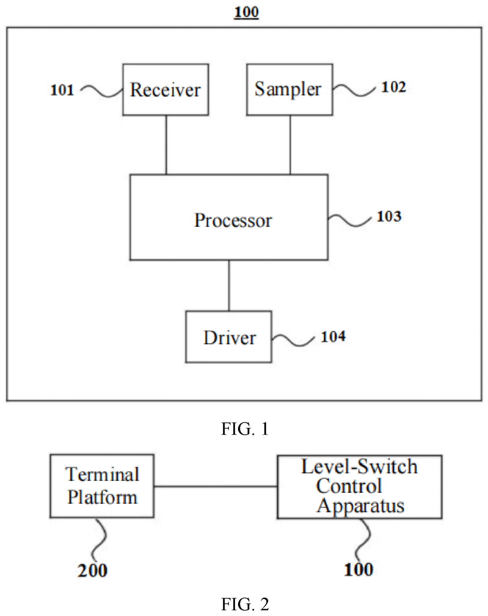

FIG. 1 shows a schematic block diagram of a level-switch control apparatus 100 for a dimmable device according to an embodiment of the present disclosure. The apparatus 100 may include a receiver 101, a sampler 102, a processor 103 and a driver 104. The receiver 101 is configured to receive a first level-switch instruction. The first level-switch instruction carries a first target open-circuit voltage. The sampler 102 is configured to obtain a first current open-circuit voltage and a current temperature of the dimmable device. The processor 103 is configured to determine a charging parameter or a discharging parameter configured for the dimmable device based on the current temperature, and determine a charging condition configured for the dimmable device based on the charging parameter or determine a discharging condition configured for the dimmable device based on the discharging parameter. The processor 103 is also configured to calculate to determine a first target charge quantity based on the first target open-circuit voltage and the first current open-circuit voltage, and obtain a current accumulated charge quantity of the dimmable device, and determine whether to perform a charging operation or a discharging operation on the dimmable device according to a magnitude relationship between the accumulated charge quantity and the first target charge quantity. The driver 104 is configured to control the charging operation of the dimmable device based on the charging condition, or to control the discharging operation of the dimmable device based on the discharging condition.

In the embodiment of the present disclosure, the current temperature of the dimmable device is obtained by the sampler. The processor determines the charging parameter or the discharging parameter configured for the dimmable device based on the current temperature, and further determines the charging condition adopted when performing the charging operation on the dimmable device based on the charging parameter, or determines the discharging condition adopted when performing the discharging operation on the dimmable device based on the discharging parameter. That is, the impact of temperature on a color-changing process (charging operation or discharging operation) of the dimmable device is considered, and the charging condition or discharging condition is determined according to the current temperature of the dimmable device, so that a more effective level-switching control of the dimmable device at different temperatures is achieved, thereby the color-changing reliability of the dimmable device can be more effectively enhanced and the user experience is improved.

In the embodiment of the present disclosure, no special restriction is imposed on the sequence in which the receiver 101 and the sampler 102 start working, that is, no special restriction is imposed on the sequence of receiving the first level-switch instruction, obtaining the first current open-circuit voltage of the dimmable device and obtaining the current temperature of the dimmable device. In some embodiments, the receiver 101 may start working first and be configured to receive the first level-switch instruction, that is, after receiving the first level-switch instruction, the sampler 102 then starts working and is configured to obtain the first current open-circuit voltage and the current temperature of the dimmable device. In other embodiments, it may also be possible that the sampler 102 starts working first and is configured to obtain the first current open-circuit voltage and the current temperature of the dimmable device, and then the receiver 101 starts working and is configured to receive the first level-switch instruction. In still other embodiments, the receiver 101 and the sampler 102 may start working at the same time, that is, in this case, the receiver 101 and the sampler 102 are respectively configured to receive the first level-switch instruction and to obtain the first current open-circuit voltage and the current temperature of the dimmable device. Among them, after the sampler 102 starts working, no special restriction is imposed on the sequence of being configured to obtain the first current open-circuit voltage and the current temperature of the dimmable device either. For example, the first current open-circuit voltage and the current temperature of the dimmable device may be obtained simultaneously. Or alternatively, the first current open-circuit voltage of the dimmable device may be obtained first, and then the current temperature of the dimmable device is obtained. Or alternatively, the current temperature of the dimmable device may be obtained first, and then the first current open-circuit voltage of the dimmable device is obtained. In addition, the obtaining of the first current open-circuit voltage and the current temperature may be performed simultaneously either before receiving the first level-switch instruction or after receiving the first level-switch instruction, or may be conducted separately before and after receiving the first level-switch instruction, with no restrictions imposed here either.

In the embodiment of the present disclosure, the sampler 102 may be a separate structural component, or may be integrated with other components of the level-switch control apparatus 100, such as the processor 103. Among them, the quantity and types of the samplers 102 are not particularly limited. In some embodiments, the quantity of the sampler 102 may be one or more (two or above). For example, when two samplers 102 are provided, the two samplers 102 may be configured to obtain the current open-circuit voltage and the current temperature of the dimmable device respectively. In other embodiments, the sampler 102 may include a sampling circuit configured to detect and obtain the current open-circuit voltage of the dimmable device. In yet other embodiments, the sampler 102 may also include a sensor, such as a temperature sensor, which is configured to obtain the current temperature of the dimmable device.

In some embodiments, the first level-switch instruction carries the first target open-circuit voltage, which may refer to the first level-switch instruction containing the first target open-circuit voltage, or may refer to the first target open-circuit voltage being determined by reading data or calculating according to the first level-switch instruction. Hereby, the first target open-circuit voltage corresponding to the first level-switch instruction can be determined according to the actual requirements, which improves the flexibility of the level-switching control of the dimmable device.

In some embodiments, the first level-switch instruction may also carry a first target level. The correspondence between the level of the dimmable device and the open-circuit voltage may be obtained based on a specific calculation formula or may be obtained through empirical values measured experimentally. As shown in Table 1, for example, the correspondence between the level of the dimmable device and the open-circuit voltage is given. Thus, the first level-switch instruction may directly carry a voltage value corresponding to the first target open-circuit voltage, for example -0.2 V. The first level-switch instruction may also carry a level value of the first target level, for example level 8. Hereby, the corresponding open-circuit voltage may be determined by reading data or calculating according to the level value of the first target level. For example, the corresponding open-circuit voltage may be 0.4 V as the first target open-circuit voltage, which thus can simplify the determination process of the target open-circuit voltage and improve the level-switching control efficiency of the dimmable device.

**Table 1**

| Level/level | 1 | 2 | 3 | 4 | 5 | 6 | 7 | 8 | 9 | 10 | 11 |
|---|---|---|---|---|---|---|---|---|---|---|---|
| Open-circuit voltage/V | -1 | - 0.8 | -0.6 | -0.4 | - 0.2 | 0 | 0.2 | 0.4 | 0.6 | 0.8 | 1 |

In some embodiments, the processor 103 is also configured to: determine that the first target level is the current target level, and/or determine that the first target open-circuit voltage is the current target open-circuit voltage. Thus, when a level-switch instruction is received, a new instruction can be promptly refreshed and determined as a target instruction, such as the target level and/or the target open-circuit voltage, to enhance the accuracy of controlling the dimmable device.

In some embodiments, the processor 103 is configured to determine the charging parameter or the discharging parameter applied to the dimmable device based on the current temperature, which may include that the processor 103 is configured to determine the charging parameter applied to the dimmable device based on the current temperature, or alternatively, the processor 103 is configured to determine the discharging parameter applied to the dimmable device based on the current temperature.

In some embodiments, the processor 103 is specifically configured to: determine a temperature range corresponding to the current temperature; determine the charging parameter or the discharging parameter applied to the dimmable device according to the temperature range and a corresponding relationship between the temperature range and the charging parameter or the discharging parameter. For example, the charging parameter applied to the dimmable device is determined according to the temperature range and the corresponding relationship between the temperature range and the charging parameter. Or alternatively, the discharging parameter applied to the dimmable device is determined according to the temperature range and the corresponding relationship between the temperature range and the discharging parameter. Thus, the corresponding charging parameter or discharging parameter within different temperature ranges may be preset. When the detected current temperature is in a corresponding temperature range, the charging parameter or the discharging parameter corresponding to the temperature range can be directly read, simplifying the determination process of the charging parameter and the discharging parameter, which is conducive to accelerating the level-switching control process of the dimmable device and improving a color-changing rate of the dimmable device.

In some other embodiments, the processor 103 is also specifically configured to: determine a temperature range corresponding to the current temperature; determine a transmittance variation range of the dimmable device based on the temperature range and a corresponding relationship between the temperature range and the transmittance variation range; determine the charging parameter or the discharging parameter applied to the dimmable device according to the transmittance variation range and a corresponding relationship between the transmittance variation range and the charging parameter or the discharging parameter. For example, the charging parameter applied to the dimmable device is determined according to the transmittance variation range and the corresponding relationship between the transmittance variation range and the charging parameter. Or alternatively, the discharging parameter applied to the dimmable device is determined according to the transmittance variation range and the corresponding relationship between the transmittance variation range and the discharging parameter. In this case, considering the impact of temperature on the transmittance variation range of the dimmable device, different transmittance variation ranges corresponding to different temperature ranges are determined, and then the charging parameter or the discharging parameter are determined by the transmittance variation ranges. Thereby, when the dimmable device is controlled (charged or discharged) using the charging parameter or the discharging parameter determined in the above manner, the transmittance variation result of the dimmable device can be made more reliable, thus the user experience is improved.

In some embodiments, the charging parameter includes at least one of a maximum charging voltage, a maximum charging current, a charging cut-off current and a charging cut-off duration. Or alternatively, the discharging parameter includes at least one of a maximum discharging voltage, a maximum discharging current, a discharging cut-off current and a discharging cut-off duration. For the dimmable device, under different temperatures, when the same voltage or current is applied to perform the level-switching control, the color-changing rate of the dimmable device may be different, and under different temperatures, the maximum operating voltage and maximum operating current that the dimmable device can withstand may also be different. Thus, during the level-switching control process, the influence of temperature is taken into consideration, and the charging parameter and/or the discharging parameter of the dimmable device is(are) determined based on the temperature. That is, at least one of the maximum charging voltage, the maximum charging current, the charging cut-off current, the charging cut-off duration, the maximum discharging voltage, the maximum discharging current, the discharging cut-off current and the discharging cut-off duration of the dimmable device is determined based on the temperature, so that the color-changing rate of the dimmable device can be more effectively improved or the service life of the dimmable device can be prolonged, among other benefits, to enhance the color-changing reliability and ultimately improve the user experience.

Exemplarily, a correspondence among the charging parameter and the discharging parameter and the temperature range and the transmittance variation range may be shown in Table 2. In the temperature range shown in Table 2, the sign "-" in front of each value indicates a negative value, that is, a temperature below zero. For example, a temperature of -100C indicates that the temperature is minus 100C. In the discharging parameter shown in Table 2, the sign "-" in front of each value does not indicate a negative value, but only indicates that its charging-and-discharging direction is a discharging direction. For example, a maximum discharging voltage of -0.6 V indicates that the maximum voltage during discharging is 0.6 V, a maximum discharging current of -600 mA indicates that the maximum current during discharging is 600 mA, a discharging cut-off current of - 40 mA indicates that the cut-off current during discharging is 40 mA, and a discharging cut-off duration of -200 s indicates that the cut-off duration during discharging is 200 s.

**Table 2**

| Temperature range | | -15~-10 ⁰C | -10~0 ⁰C | 0~500~50 ⁰C | 50~65 ⁰C | 65~85 ⁰C |
|---|---|---|---|---|---|---|
| | | | | | | |
| Transmittance variation range | | 2~6% | 2~6% | 1~6% | 1~5% | 1~3% |
| Charging parameter | Maximum charging voltage/V | 1.6 | 1.5 | 1.4 | 1.2 | 0.9 |
| | Maximum charging current/mA | 600 | 600 | 600 | 600 | 600 |
| | Charging cut-off current/mA | 40 | 40 | 40 | 40 | 40 |
| | Charging cut-off duration/s | 350 | 350 | 300 | 300 | 200 |
| Discharging parameter | Maximum discharging voltage/V | -1 | -0.9 | -0.8 | -0.6 | -0.6 |
| | Maximum discharging current/mA | -600 | -600 | -600 | -600 | -600 |
| | Discharging cut-off current/mA | -20 | -40 | -40 | -40 | -40 |
| | Discharging cut-off duration/s | -350 | -200 | -150 | -150 | -100 |

In some embodiments, each temperature may directly correspond to a set of charging parameters or discharging parameters, so that the charging parameter or the discharging parameter applied to the dimmable device may be directly determined according to the current temperature detected. Thus, the control of the dimmable device under different temperatures may be more accurate, which can further prolong the service life of the dimmable device.

In some embodiments, the charging parameter and/or discharging parameter may be determined entirely based on the temperature. In other embodiments, the charging parameter and/or discharging parameter may also be determined partially based on the current temperature and partially not based on the current temperature. For example, the maximum charging voltage, the charging cut-off current and the charging cut-off duration in the charging parameter may be determined based on the temperature. For example, under different temperatures, the corresponding maximum charging voltage, charging cut-off current and charging cut-off duration may vary or be partially the same, while the maximum charging current may be determined not based on temperature. For example, the maximum charging current may be one or more preset specific values that are not associated with temperature. The maximum discharging voltage, the discharging cut-off current and the discharging cut-off duration in the discharging parameter may be determined based on temperature. For example, under different temperatures, the corresponding maximum discharging voltage, discharging cut-off current and discharging cut-off duration may vary or be partially the same, while the maximum discharging current may be determined not based on temperature. For example, the maximum discharging current may be one or more preset specific values that are not associated with temperature. Thus, different charging and discharging parameter can be set according to actual application scenarios to meet diverse user requirements.

In some embodiments, the processor 103 is configured to determine the charging condition applied to the dimmable device based on the charging parameter, and/or determine the discharging condition applied to the dimmable device based on the discharging parameter. In some embodiments, the charging condition may be entirely determined based on the charging parameter, and/or the discharging condition may be entirely determined based on the discharging parameter. In other embodiments, the charging condition may also be partially determined based on the charging parameter and partially not determined based on the charging parameter, and/or, the discharging condition may also be partially determined based on the discharging parameter and partially not determined based on the discharging parameter.

In some embodiments, the charging condition may include at least one of the following conditions: a current charging current of the dimmable device is smaller than or equal to the maximum charging current, and a current charging voltage of the dimmable device is smaller than or equal to the maximum charging voltage. In other embodiments, the charging condition may include at least one of the following conditions: the current charging current of the dimmable device is smaller than or equal to a preset charging current, and the current charging voltage of the dimmable device is smaller than or equal to the maximum charging voltage. In yet other embodiments, the charging condition includes at least one of the following conditions: the current charging current of the dimmable device is smaller than or equal to the maximum charging current, and the current charging voltage of the dimmable device is smaller than or equal to a preset charging voltage.

In this case, the charging condition of the dimmable device can be set according to the actual requirements, such as controlling the charging current to be not greater than the preset charging current or the maximum charging current determined based on the temperature, controlling the charging voltage to be not greater than the preset charging voltage or the maximum charging voltage determined based on the temperature, etc. Hereby, it is possible to prevent the charging current or charging voltage of the dimmable device from exceeding the maximum charging current or maximum charging voltage the dimmable device can withstand during a level-switching and color-changing process, which thus can avoid damage to the dimmable device and prolong the service life of the dimmable device. In particular, when the charging current or charging voltage of the dimmable device during the level-switching and color-changing process is limited to not greater than the maximum charging current or maximum charging voltage determined based on the temperature, etc., it can be further determined based on the current temperature of the dimmable device to charge the dimmable device at the maximum charging current or maximum charging voltage that the dimmable device can withstand at the current temperature, which can more effectively avoid damage to the dimmable device, and then more effectively prolong the service life of the dimmable device. Furthermore, the charging current may also be set to be equal to or close to (for example, slightly smaller than) the preset charging current or the maximum charging current determined based on the temperature. Or alternatively, the charging voltage may be set to be equal to or close to (for example, slightly smaller than) the preset charging voltage or the maximum charging voltage determined based on the temperature, to accelerate the level-switching and color-changing process of the dimmable device and improve the color-changing rate of the dimmable device.

In some embodiments, the discharging condition includes at least one of the following conditions: a current discharging current of the dimmable device is smaller than or equal to the maximum discharging current, and a current discharging voltage of the dimmable device is smaller than or equal to the maximum discharging voltage. In other embodiments, the discharging condition includes at least one of the following conditions: the current discharging current of the dimmable device is smaller than or equal to a preset discharging current, and the current discharging voltage of the dimmable device is smaller than or equal to the maximum discharging voltage. In some other embodiments, the discharging condition includes at least one of the following conditions: the current discharging current of the dimmable device is smaller than or equal to the maximum discharging current, and the current discharging voltage of the dimmable device is smaller than or equal to a preset discharging voltage.

In this case, the discharging condition of the dimmable device can also be set according to the actual requirements, such as controlling the discharging current not to be greater than the preset discharging current or the maximum discharging current determined based on the temperature, controlling the discharging voltage not to be greater than the preset discharging voltage or the maximum discharging voltage determined based on the temperature, etc. Hereby, it is possible to prevent the discharging current or discharging voltage of the dimmable device from exceeding the maximum discharging current or maximum discharging voltage the dimmable device can withstand during the level-switching and color-changing process, which thus can avoid damage to the dimmable device and prolong the service life of the dimmable device. In particular, when the discharging current or discharging voltage of the dimmable device during the level-switching and color-changing process is limited to not greater than the maximum discharging current or maximum discharging voltage determined based on the temperature, etc., it can be further determined based on the current temperature of the dimmable device to discharge the dimmable device at the maximum discharging current or maximum discharging voltage that the dimmable device can withstand at the current temperature, which can more effectively avoid damage to the dimmable device, and then more effectively prolong the service life of the dimmable device. Furthermore, the discharging current may be set to be equal to or close to (for example, slightly smaller than) the preset discharging current or the maximum discharging current determined based on temperature. Or alternatively, the discharging voltage may be set to be equal to or close to (for example, slightly smaller than) the preset discharging voltage or the maximum discharging voltage determined based on temperature, to accelerate the level-switching and color-changing process of the dimmable device and improve the color-changing rate of the dimmable device.

In some embodiments, the processor 103 is configured to calculate to determine the first target charge quantity based on the first target open-circuit voltage and the first current open-circuit voltage, and obtain the current accumulated charge quantity of the dimmable device, and determine whether to perform the charging operation or the discharging operation on the dimmable device according to the magnitude relationship between the accumulated charge quantity and the first target charge quantity.

Herein, the processor 103 is configured to calculate to determine the first target charge quantity based on the first target open-circuit voltage and the first current open-circuit voltage. In some embodiments, the first target charge quantity may be calculated according to a relational expression among a target charge quantity, the target open-circuit voltage and the current open-circuit voltage. Exemplarily, the target charge quantity is denoted as Qn, the target open-circuit voltage is denoted as Un, and the current open-circuit voltage is denoted as Ux. The relationship among the three may be expressed as Qn = k×(Un-Ux), where k may be an empirical value, for example, obtained based on experimental test data. Thus, the values of the first current open-circuit voltage and the first target open-circuit voltage obtained in step S101 are input as Un and Ux in this relational expression, and the corresponding value of Qn may be calculated as the first target charge quantity.

In other embodiments, the first target charge quantity may also be calculated based on a relational expression between the charge quantity and the open-circuit voltage. For example, the charge quantity is denoted as Qm and the open-circuit voltage is denoted as Um. The relationship between the two may be expressed as Qm = r×Um+b, where r and b may be empirical values, for example, obtained based on experimental test data. Thus, if the value of the first target open-circuit voltage obtained in step S101 is input as Um in this relational expression, then a charge quantity may be calculated and denoted as Q1. If the value of the first current open-circuit voltage obtained in step S101 is input as Um in this relational expression, then another charge quantity may be calculated and denoted as Q2. The value obtained through a calculation of Q1-Q2 is the first target charge quantity.

In some other embodiments, the charge quantity and the open-circuit voltage may have a one-to-one correspondence, such as shown in Table 3. Thus, the values of the first target open-circuit voltage and the first current open-circuit voltage are obtained by the receiver 101 and the sampler 102, respectively, such as -0.5 V and 0.7 V then the values of the two corresponding charge quantities may be respectively obtained by reading from the table, such as 0.05 Q and 0.65 Q respectively, and then the first target charge quantity is obtained by calculating a difference between the two charge quantities. In Table 3, Q may be the charge quantity of the dimmable device in a fully-charged state, that is, the charge quantity corresponding to the maximum or minimum transmittance of the dimmable device.

**Table 3**

| | | | | | | | |
|---|---|---|---|---|---|---|---|
| Open-circuit voltage | -0.7V | -0.5V | 0 | 0.5V | 0.7V | 0.9V | ...... |
| Charge quantity | 0 | 0.05Q | 0.2Q | 0.35Q | 0.65Q | Q | ...... |

In the embodiment of the present disclosure, the processor 103 may be configured to obtain the current accumulated charge quantity of the dimmable device. In some embodiments, the current accumulated charge quantity may be a real-time charge quantity value directly detected by the processor 103. In other embodiments, the processor 103 may also first detect the real-time current value, and then calculate the real-time accumulated charge quantity through the integration of the real-time current and the charging and discharging durations, that is the current accumulated charge quantity.

In some embodiments, the processor 103 may be configured to determine whether to perform a charging operation or a discharging operation on the dimmable device according to the magnitude relationship between the accumulated charge quantity and the first target charge quantity, which may specifically include operations of: determining the magnitude relationship between the accumulated charge quantity and the first target charge quantity, and determining to perform the charging operation on the dimmable device when the accumulated charge quantity is smaller than the first target charge quantity, determining to perform the discharging operation on the dimmable device when the accumulated charge quantity is greater than the first target charge quantity, and determining to perform the charging operation or the discharging operation on the dimmable device when the accumulated charge quantity is equal to the first target charge quantity. Thereby, when the first level-switch instruction is received, whether to perform the charging operation or the discharging operation on the dimmable device can be determined directly by comparing the current accumulated charge quantity with the first target charge quantity, without having to perform a complicated calculation process (for example, calculating a difference between the accumulated charge quantity and the target charge quantity, and then determining whether to perform the charging operation or the discharging operation on the dimmable device according to the difference). This simplifies the level-switching control process of the dimmable device, which is conducive to improving the color-changing rate of the dimmable device.

In the embodiment of the present disclosure, no specific limitation is imposed on the sequence of the processor 103 being configured to determine the charging parameter or the discharging parameter, the charging condition or the discharging condition, and the processor 103 being configured to determine whether to perform the charging operation or the discharging operation. In some embodiments, the processor 103 may be first configured to determine the charging parameter or the discharging parameter applied to the dimmable device based on the current temperature, and to determine the charging condition applied to the dimmable device based on the charging parameter or to determine the discharging condition applied to the dimmable device based on the discharging parameter; and then configured to calculate to determine the first target charge quantity based on the first target open-circuit voltage and the first current open-circuit voltage, and obtain the current accumulated charge quantity of the dimmable device, as well as determine to perform the charging operation or the discharging operation on the dimmable device based on the magnitude relationship between the accumulated charge quantity and the first target charge quantity. In other embodiments, the processor 103 may be first configured to calculate to determine the first target charge quantity based on the first target open-circuit voltage and the first current open-circuit voltage, and obtain the current accumulated charge quantity of the dimmable device, and determine whether to perform the charging operation or the discharging operation on the dimmable device based on the magnitude relationship between the accumulated charge quantity and the first target charge quantity; and then be configured to determine the charging parameter or the discharging parameter applied to the dimmable device based on the current temperature, and determine the charging condition applied to the dimmable device based on the charging parameter or determine the discharging condition applied to the dimmable device based on the discharging parameter. In some other embodiments, the processor 103 may be configured to simultaneously determine the charging parameter or the discharging parameter applied to the dimmable device based on the current temperature, and to determine the charging condition applied to the dimmable device based on the charging parameter or to determine the discharging condition applied to the dimmable device based on the discharging parameter; and configured, at the same time, to calculate to determine the first target charge quantity based on the first target open-circuit voltage and the first current open-circuit voltage, to obtain the current accumulated charge quantity of the dimmable device, and to determine to perform the charging operation or the discharging operation on the dimmable device according to the magnitude relationship between the accumulated charge quantity and the first target charge quantity.

In the embodiment of the present disclosure, the driver 104 may be configured to control the charging operation of the dimmable device based on the charging condition, or to control the discharging operation of the dimmable device based on the discharging condition. Here, no particular limitation is imposed on the specific mode of charging or discharging the dimmable device. In some embodiments, the charging operation may include at least one of a constant voltage charging mode, a constant current charging mode, a pulse charging mode and a scan-rate charging mode, and the discharging operation may include at least one of a constant voltage discharging mode, a constant current discharging mode, a pulse discharging mode and a scan-rate discharging mode.

Among them, the constant voltage charging mode or the constant voltage discharging mode is that an external power supply performs constant voltage charging or constant voltage discharging on the dimmable device. The constant current charging mode or the constant current discharging mode is that the external power supply performs constant current charging or constant current discharging on the dimmable device. The scan-rate charging mode or the scan-rate discharging mode is that the external power supply performs scan-rate charging or scan-rate discharging on the dimmable device. The pulse charging mode or the pulse discharging mode may include at least one pulse segment and at least one intermittent segment, the pulse segments and the intermittent segments are distributed in an alternative manner, and a duration of each pulse segment or each intermittent segment may be relatively short, for example, the duration may be within 0.001 to 20 seconds. Herein, a specific voltage or a specific current may be used for charging or discharging in the pulse segment, and charging or discharging may be temporarily halted in the intermittent segment, or a voltage or current phase-inverted relative to the pulse segment may be used for charging or discharging.

In some embodiments, the charging operation may include at least one of the following: an instantaneous high voltage combined with the constant voltage charging, an instantaneous high current combined with the constant voltage charging, the instantaneous high voltage combined with the constant current charging, and the instantaneous high current combined with the constant current charging. The discharging operation may include at least one of the following: the instantaneous high voltage combined with the constant voltage discharging, the instantaneous high current combined with the constant voltage discharging, the instantaneous high voltage combined with constant current discharging, and the instantaneous high current combined with the constant current discharging. The instantaneous high voltage may be a higher voltage applied in a short time, for example, a high voltage of 2-40 V higher than the electrochemical stability window of the dimmable device applied within 0.001-20 s, etc. The instantaneous high current may be a higher current applied in a short time, for example, a high current of 1-100 A applied within 0.001-20 s, etc.

In some embodiments, the driver 104 is configured to control the charging operation of the dimmable device based on the charging condition, which may mean that no matter what charging mode is used to charge the dimmable device, the dimmable device during a charging process needs to meet the charging condition, such as, the charging current during the charging process being smaller than or equal to the maximum charging current or the preset charging current, and/or the charging voltage during the charging process being smaller than or equal to the maximum charging voltage or the preset charging voltage. In other embodiments, the driver 104 is configured to control the discharging operation of the dimmable device based on the discharging condition, which may mean that no matter what discharging mode is used to discharging the dimmable device, the dimmable device during a discharging process needs to meet the discharging condition, such as, the discharging current during the discharging process being smaller than or equal to the maximum discharging current or the preset discharging current, and/or the discharging voltage during the discharging process being smaller than or equal to the maximum discharging voltage or the preset discharging voltage.

In some embodiments, the driver 104 is also configured to: interrupt the charging operation when the charging cut-off condition is not met but a second level-switch instruction is received; or interrupt the discharging operation when the discharging cut-off condition is not met but the second level-switch instruction is received.

In some embodiments, the operation of determining whether the dimmable device meets the charging cut-off condition or the discharging cut-off condition may be executed after a specific time period following the commencement of the charging or discharging operation. The specific time period is not particularly limited here. For example, determining whether the charging cut-off condition or the discharging cut-off condition is met may be executed 0.5 s after the charging or discharging operation starts, or 1 s after the charging or discharging operation starts. Generally, in an initial stage of the charging or discharging operation, the dimmable device may have a small voltage, current or charge quantity. Delaying the execution time of determining the cut-off condition to a specific time after the charging or discharging operation can prevent the situation where the dimmable device is mistakenly judged to meet the cut-off condition and the charging or discharging operation is mistakenly cut off in the initial stage of the charging or discharging operation. Thus, the accuracy and effectiveness for controlling the dimmable device is improved.

In some embodiments, the driver 104 may also be configured to: continue to perform the charging or discharging operation on the dimmable device when the second level-switch instruction is not received.

In some embodiments, the charging cut-off condition may be determined based on the charging parameter, and the charging parameter includes at least one of a maximum charging voltage, a maximum charging current, a charging cut-off current, and a charging cut-off duration. Among them, the charging cut-off condition includes at least one of the following conditions: the current charging current of the dimmable device is smaller than or equal to the charging cut-off current, the current accumulated charge quantity of the dimmable device is not smaller than the first target charge quantity or the second target charge quantity, and the current accumulated charging duration of the dimmable device is greater than or equal to the charging cut-off duration. In other embodiments, the charging cut-off condition includes at least one of the following conditions: the current charging current of the dimmable device is smaller than or equal to the charging cut-off current, the current accumulated charge quantity of the dimmable device is not smaller than the first target charge quantity or the second target charge quantity, and the current accumulated charging duration of the dimmable device is greater than or equal to a preset charging cut-off duration. In some other embodiments, the charging cut-off condition may include at least one of the following conditions: the current charging current of the dimmable device is smaller than or equal to a preset charging cut-off current, the current accumulated charge quantity of the dimmable device is not smaller than the first target charge quantity or the second target charge quantity, and the current accumulated charging duration of the dimmable device is greater than or equal to the charging cut-off duration. Among them, in the above charging cut-off condition, the condition where the current accumulated charge quantity of the dimmable device is not smaller than the first target charge quantity or the second target charge quantity may be expressed as follows: when the latest instruction corresponds to the first level-switch instruction, the condition is that the current accumulated charge quantity of the dimmable device is not smaller than the first target charge quantity; and when the latest instruction corresponds to the second level-switch instruction, the condition is that the current accumulated charge quantity of the dimmable device is not smaller than the second target charge quantity. In addition, when the latest instruction corresponds to a third level-switch instruction, the charging cut-off condition may also include that the current accumulated charge quantity of the dimmable device is not smaller than the third target charge quantity.

Thus, the charging cut-off condition of the dimmable device can be set according to the actual requirements, to stop the charging process in time and ensure the accuracy of level-switching and color-changing control of the dimmable device. Moreover, by determining the charging parameter according to the current temperature of the dimmable device, and further determining the charging cut-off condition according to the charging parameter, the method of determining the charging cut-off condition according to the current temperature of the dimmable device is realized, so that the effect of accurately regulating the dimmable device at different temperatures can be improved, and the accuracy of the dimmable device regulating the light beam intensity can be improved, thereby the user's experience is further improved. In addition, when the preset charging cut-off current is too large or the preset charging cut-off duration is too short, the dimmable device may prematurely terminate the charging process before actually reaching the color transition endpoint, as a result, the accuracy of level-switching and color-changing control of the dimmable device is reduced. Conversely, when the preset charging cut-off current is too small or the preset charging cut-off duration is too long, the dimmable device may continue charging even after reaching the color transition endpoint, which similarly diminishes the accuracy of level-switching and color-changing control of the dimmable device. Additionally, over-charging could potentially damage the device and shorten the device's service life. In this case, when the charging cut-off condition is limited to not greater than the charging cut-off current or charging cut-off duration determined based on the temperature, the charging cut-off current or charging cut-off duration required at the current temperature can be further determined based on the current temperature of the dimmable device, which can improve the accuracy of the level-switching and color-changing control of the dimmable device, and also can more effectively avoid damage to the device caused by over-discharging. Thus, the service life of dimmable device can be more effectively prolonged.

In some embodiments, the discharging cut-off condition may be determined based on the discharging parameter, and the discharging parameter includes at least one of a maximum discharging voltage, a maximum discharging current, a discharging cut-off current and a discharging cut-off duration. Among them, the discharging cut-off condition includes at least one of the following conditions: the current discharging current of the dimmable device is smaller than or equal to the discharging cut-off current, the current accumulated charge quantity of the dimmable device is not greater than the first target charge quantity or the second target charge quantity, and the current accumulated discharging duration of the dimmable device is greater than or equal to the discharging cut-off duration. In some other embodiments, the discharging cut-off condition includes at least one of the following conditions: the current discharging current of the dimmable device is smaller than or equal to the discharging cut-off current, the current accumulated charge quantity of the dimmable device is not greater than the first target charge quantity or the second target charge quantity, and the current accumulated discharging duration of the dimmable device is greater than or equal to a preset discharging cut-off duration. In some other embodiments, the discharging cut-off condition includes at least one of the following conditions: the current discharging current of the dimmable device is smaller than or equal to a preset discharging cut-off current, the current accumulated charge quantity of the dimmable device is not greater than the first target charge quantity or the second target charge quantity, and the current accumulated discharging duration of the dimmable device is greater than or equal to the discharging cut-off duration. Among them, in the above-mentioned discharging cut-off condition, the condition that the current accumulated charge quantity of the dimmable device is not greater than the first target charge quantity or the second target charge quantity may be expressed as follows: when the latest instruction corresponds to the first level-switch instruction, the condition is that the current accumulated charge quantity of the dimmable device is not greater than the first target charge quantity; and when the latest instruction corresponds to the second level-switch instruction, the condition is that the current accumulated charge quantity of the dimmable device is not greater than the second target charge quantity. In addition, when the latest instruction corresponds to the third level-switch instruction, the discharging cut-off condition may also include that the current accumulated charge quantity of the dimmable device is not greater than the third target charge quantity. Here, during the discharging operation, the accumulated charge quantity is recorded as a negative number, and the target charge quantity is also recorded as a negative number. The so-called "the current accumulated charge quantity of the dimmable device is not greater than the first target charge quantity or the second target charge quantity or the third target charge quantity" refers to the comparison of the magnitudes with negative values. Obviously, if the accumulated charge quantity during the discharging operation is recorded as a positive number, and the target charge quantity is also recorded as a positive number, then this condition may be adjusted to that the current accumulated charge quantity of the dimmable device is not smaller than the first target charge quantity or the second target charge quantity or the third target charge quantity.

Thus, the discharging cut-off condition of the dimmable device can be set according to the actual requirements, to stop the discharging process in time and ensure the accuracy of the level-switching and color-changing control of the dimmable device. Moreover, by determining the discharging parameter according to the current temperature of the dimmable device, and further determining the discharging cut-off condition according to the discharging parameter, the method of determining the discharging cut-off condition according to the current temperature of the dimmable device is realized, so that the effect of accurately regulating the dimmable device at different temperatures can be improved, and the accuracy of the dimmable device regulating the light beam intensity can be improved, thereby the user's experience is further improved. In addition, when the preset discharging cut-off current is too large or the preset discharging cut-off duration is too short, the dimmable device may be caused to prematurely terminate the discharging process before actually reaching the color transition endpoint, as a result, the accuracy of level-switching color-changing control of the dimmable device is reduced. Conversely, when the preset discharging cut-off current is too small or the preset discharging cut-off duration is too long, it may result in the dimmable device having already reached the color transition endpoint without the discharging process being stopped, which similarly diminishes the accuracy of level-switching and color-changing control of the dimmable device. Additionally, over-charging could potentially damage the device and shorten the device's service life. In this case, when the discharging cut-off condition is limited to not greater than the discharging cut-off current or discharging cut-off duration determined based on the temperature, the discharging cut-off current or discharging cut-off duration required at the current temperature can be further determined based on the current temperature of the dimmable device, which can improve the accuracy of the level-switching and color-changing control of the dimmable device, and more effectively avoid damage to the device caused by over-discharging. Thus, the service life of dimmable device can be more effectively prolonged.

In some embodiments, the driver 104 may also be configured to: interrupt the charging operation when the charging cut-off condition is not met but the second level-switch instruction is received; or alternatively, interrupt the discharging operation when the discharging cut-off condition is not met but the second level-switch instruction is received. Thus, when the charging cut-off condition or the discharging cut-off condition is not met, that is, in a case where a level-switching process of the dimmable device has not yet ended, while a new level-switch instruction is detected, indicating that a user intends to present the final color-changing effect of the dimmable device with the level corresponding to the new level-switch instruction. In this case, the driver suspends the current level-switching and color-changing process by interrupting the charging or discharging operation, so that the device does not need to continue to change color according to the original level-switch instruction, which simplifies the interruption operation process and can further accelerate the color-changing rate of the device to enhance the user experience.

In some embodiments, the second level-switch instruction may carry a second target open-circuit voltage and a second target level. Similarly, in some embodiments, the second level-switch instruction may carry the second target open-circuit voltage, which may refer to that the second level-switch instruction contains the second target open-circuit voltage, or the second target open-circuit voltage is determined by reading data or through a calculation according to the second level-switch instruction. Thus, the second target open-circuit voltage corresponding to the second level-switch instruction can be determined according to the actual requirements, which enhances the flexibility of the level-switching control of the dimmable device.

In some embodiments, the second level-switch instruction may also carry the second target level. The correspondence between the level of the dimmable device and the open-circuit voltage may be obtained based on a specific calculation formula or may be obtained through an empirical value measured experimentally. As shown in Table 1 above, the correspondence between the level of the dimmable device and the open-circuit voltage is given. Thus, the second level-switch instruction may also be implemented as described in the first level-switch instruction. The second level-switch instruction may directly carry the voltage value corresponding to the second target open-circuit voltage or the second target level value. Thus, the corresponding open-circuit voltage may be determined by reading data or by calculating according to the level value of the second target level, as the second target open-circuit voltage, which simplifies the determination process of the target open-circuit voltage and thus can improve the level-switching control efficiency of the dimmable device.

In some embodiments, the processor 103 may also be configured to: update an instruction modification count of the second level-switch instruction and determine whether the instruction modification count is smaller than or equal to a preset modification threshold; and read the open-circuit voltage corresponding to the second level-switch instruction as the second target open-circuit voltage when the instruction modification count is smaller than or equal to the preset modification threshold. In other embodiments, when the instruction modification count is greater than the preset modification threshold, the open-circuit voltage corresponding to the second level-switch instruction is not read, and the charging or discharging operation is continued. Therefore, by providing a determination of the instruction modification count, and reading the open-circuit voltage corresponding to the second level-switch instruction as the target open-circuit voltage (that is, performing an interruption operation to update the target open-circuit voltage for the level-switching and color-changing process according to the new target level) only when the instruction modification count is not greater than the preset modification threshold while refraining from the interruption operation (that is, not updating the target open-circuit voltage) when the instruction modification count is greater than the preset modification threshold, it is possible to avoid the level-switching process from being interrupted too frequently during the level-switching control process, which improves the user experience and is conducive to prolonging the service life of the dimmable device.

In some embodiments, the processor 103 is also configured to: determine the second target level as the current target level, and/or determine the second target open-circuit voltage as the current target open-circuit voltage; calculate to determine the second target charge quantity based on the second target open-circuit voltage and the first current open-circuit voltage, and obtain the current accumulated charge quantity of the dimmable device, and determine to perform the charging operation or the discharging operation on the dimmable device according to the magnitude relationship between the accumulated charge quantity and the second target charge quantity.

The open-circuit voltage is a terminal voltage of the dimmable device in an open circuit or a disconnected state. Under normal circumstances, in the initial stage of the dimmable device forming the open circuit or the disconnected state, the terminal voltage of the dimmable device has not yet stabilized. If the terminal voltage detected at this time is used as the open-circuit voltage of the device, it is not accurate enough. Usually, after waiting for a specific time, such as 1 minute or 2 minutes, the terminal voltage of the device tends to stabilize. It is more accurate to use the terminal voltage detected after waiting for a specific time as the open-circuit voltage of the device. In this case, when the charging cut-off condition or the discharging cut-off condition is not met but the second level-switch instruction is received, the charging or discharging operation is interrupted (i.e., the interruption operation), and then the second target open-circuit voltage carried by the second level-switch instruction and the first current open-circuit voltage initially measured are directly used as the basis for calculating to determine a new target charge quantity. This allows the process to proceed to a new level-switching process according to the new target charge quantity, and continue to level-switch and change the color of the dimmable device. Thus, after the above interruption operation, there is no need to re-detect the current open-circuit voltage of the device. Instead, the first current open-circuit voltage initially measured is directly used as the basis for calculating the target charge quantity. This approach can effectively avoid the instability (inaccuracy) of the current open-circuit voltage detected immediately during the interruption operation, improving the accuracy of the target charge quantity calculation and consequently enhancing the accuracy of the level-switching and color-changing process of the dimmable device.

In some embodiments, the operation of determining to perform the charging operation or the discharging operation on the dimmable device according to the magnitude relationship between the accumulated charge quantity and the second target charge quantity includes the following operations: determining the magnitude relationship between the accumulated charge quantity and the second target charge quantity; determining to perform the charging operation on the dimmable device when the accumulated charge quantity is smaller than the second target charge quantity; determining to perform the discharging operation on the dimmable device when the accumulated charge quantity is greater than the second target charge quantity; and determining to perform the charging operation or the discharging operation on the dimmable device when the accumulated charge quantity is equal to the second target charge quantity. Thus, when receiving the second level-switch instruction, the charging operation or the discharging operation on the dimmable device can be determined directly by comparing the current accumulated charge quantity with the second target charge quantity, without the need for a complicated calculation process (for example, calculating a difference between the accumulated charge quantity and the target charge quantity, and then determining to perform the charging operation or the discharging operation on the dimmable device according to the difference), which simplifies the level-switching control process of the dimmable device, and facilitates improving the color-changing rate of the dimmable device, etc.

In some other embodiments, the driver 104 is also configured to: stop the charging operation when the charging cut-off condition is met, or stop the discharging operation when the discharging cut-off condition is met. Thus, the charging or discharging operation process of the dimmable device can be stopped in time according to the charging cut-off condition or the discharging cut-off condition to prevent the device from being over-charged or over-discharged, thereby the service life of the device can be prolonged.

The level-switch control apparatus 100 provided in the embodiment of the present disclosure may also include a transmitter (not shown). In some embodiments, the transmitter may be configured to send a first-stage level-switch completion signal. Thus, the signal indicating that the first-stage level-switching is completed may be transmitted to the signal transceiver (e.g., the terminal platform) in time to trigger subsequent control steps of the dimmable device.

In some embodiments, the processor 103 in the apparatus 100 is also configured to leave the dimmable device to rest and record a rest duration. The transmitter in the apparatus 100 is also configured to: send a second-stage level-switch completion signal when the rest duration reaches a preset rest duration.

In some other embodiments, the processor 103 is also configured to: rest the dimmable device and record the rest duration; read a third target open-circuit voltage and a third target level corresponding to a third level-switch instruction when the rest duration does not reach the preset rest duration and the third level-switch instruction is received; determine the third target level as the current target level, and/or determine the third target open-circuit voltage as the current target open-circuit voltage; and calculate to determine the third target charge quantity based on the third target open-circuit voltage and the first current open-circuit voltage, obtain the current accumulated charge quantity of the dimmable device, and determine whether to perform the charging operation or the discharging operation on the dimmable device according to a magnitude relationship between the accumulated charge quantity and the third target charge quantity.

In some embodiments, a recording of the rest duration may start from a moment when the charging operation or the discharging operation is stopped, or may start from a moment when the first-stage level-switch completion signal is sent. In some other embodiments, the recording of the rest duration may be recorded from 0 or may be recorded in a countdown manner.

In the embodiments of the present disclosure, the specific value of the preset rest duration is not particularly limited, and a specific value can be set according to the actual requirements. In some embodiments, the preset rest duration may be 1 minute. In other embodiments, the preset rest duration may also be 2 minutes, etc.

In some embodiments, the processor 103 may be configured to determine whether a third level-switch instruction is received. The processor 103 may also be configured to: read the third target open-circuit voltage and the third target level corresponding to the third level-switch instruction when the rest duration does not reach the preset rest duration, and the third level-switch instruction is received. The transmitter may be configured to send the second-stage level-switch completion signal when the rest duration reaches the preset rest duration.

As described above, in the initial stage when the dimmable device forms an open circuit or a disconnected state, the detected open-circuit voltage is unstable (inaccurate). In this case, after stopping the charging or discharging operation, the dimmable device is allowed to wait for the preset rest duration before sending the second-stage level-switch completion signal, i.e., sending the signal indicating the end of the level-switching and color-changing process to the signal transceiver (such as the terminal platform). Thereafter, if a new level-switch instruction is received, the aforementioned level-switching control process may be performed again, that is, the current open-circuit voltage is re-detected, and the detected open-circuit voltage at this time is also more accurate and stable. If the third level-switch instruction is received within the preset rest duration, then similar to the above-mentioned interruption operation, in this case, a new target charge quantity is calculated and determined based on the third target open-circuit voltage carried by the received third level-switch instruction and the initially measured first current open-circuit voltage. This allows the process to proceed to a new level-switch process according to the new target charge quantity, and continue to level-switch and change the color of the dimmable device. Therefore, in the above process, when the third level-switch instruction is received within the preset rest duration, there is no need to re-detect the current open-circuit voltage of the device. Instead, the initially measured first current open-circuit voltage is directly used as the basis for calculating the target charge quantity. This effectively avoids the instability (inaccuracy) of the detected current open-circuit voltage caused by insufficient rest duration of the device which leads to unstable terminal voltage. Consequently, the accuracy of the target charge quantity calculation is enhanced, and thus the accuracy of the level-switching and color-changing process of the dimmable device is improved.

In some embodiments, the processor 103 is also configured to: determine the magnitude relationship between the accumulated charge quantity and the first target charge quantity, or the second target charge quantity, or the third target charge quantity; determine to perform the charging operation on the dimmable device when the accumulated charge quantity is smaller than the first target charge quantity, or the second target charge quantity, or the third target charge quantity; determine to perform the discharging operation on the dimmable device when the accumulated charge quantity is greater than the first target charge quantity, or the second target charge quantity, or the third target charge quantity; and determine to perform the charging operation or the discharging operation on the dimmable device when the accumulated charge quantity is equal to the first target charge quantity, or the second target charge quantity, or the third target charge quantity. Thus, when the third level-switch instruction is received, the charging operation or the discharging operation of the dimmable device can be determined directly by comparing the current accumulated charge quantity with the third target charge quantity, without the need for complicated calculation processes (such as calculating the difference between the accumulated charge quantity and the target charge quantity, and then determining the charging operation or the discharging operation of the dimmable device according to the difference), which simplifies the level-switching control process of the dimmable device, and thus facilitates the improvement of the color-changing rate of the dimmable device.

In the embodiments provided in the present disclosure, the number of times the first level-switch instruction, the second level-switch instruction and the third level-switch instruction being received is not particularly limited. In some embodiments, the number of times the first level-switch instruction being received may be, for example, 1 or multiple times. In other embodiments, the number of times the second level-switch instruction is received may be, for example, 0, 1 or multiple times. In yet other embodiments, the number of times the third level-switch instruction is received may be, for example, 0, 1 or multiple times.

In some embodiments, the processor 103 is also configured to: determine whether the current target level is a lowest level or a highest level when the rest duration reaches the preset rest duration. In other embodiments, the transmitter is also configured to: send the second-stage level-switch completion signal when the current target level is the lowest level or the highest level.

In some embodiments, when the latest instruction received is the first level-switch instruction, the current target level may be the first target level carried by the first level-switch instruction or determined according to the first level-switch instruction. In other embodiments, when the latest instruction received is the second level-switch instruction, the current target level may be the second target level carried by the second level-switch instruction or determined according to the second level-switch instruction. In still other embodiments, when the latest instruction received is the third level-switch instruction, the current target level may be the third target level carried by the third level-switch instruction or determined according to the third level-switch instruction.

The lowest level and the highest level may correspond to the dimmable device's lowest and highest transmittance states, respectively. In some embodiments, the lowest level may be a level corresponding to the dimmable device in the lowest transmittance state, and accordingly, the highest level is a level corresponding to the dimmable device in the highest transmittance state. In other embodiments, the lowest level may be the level corresponding to the dimmable device in the highest transmittance state, and accordingly, the highest level is the level corresponding to the dimmable device in the lowest transmittance state. Here, the so-called highest transmittance state and the lowest transmittance state may refer to the maximum and minimum light transmittance states that the dimming device itself can achieve, or may refer to the artificially defined highest and lowest light transmittance states at which the dimming device is instructed to stop operating.

In some embodiments, the processor 103 is also configured to: determine whether the current target level is the lowest level or the highest level when the rest duration reaches the preset rest duration. In some other embodiments, the sampler 102 is also configured to: obtain the second current open-circuit voltage of the dimmable device when the current target level is neither the lowest level nor the highest level. In some other embodiments, the processor 103 is also configured to: calculate to determine a first voltage difference between the second current open-circuit voltage and the current target open-circuit voltage. In some other embodiments, the transmitter is also configured to: send the second-stage level-switch completion signal when the first voltage difference is in a preset voltage error range.

In some embodiments, the current target level is neither the lowest level nor the highest level, which may indicate that the current target level is an intermediate level other than the lowest level and the highest level.

The processor 103 in the apparatus 100 may be configured to calculate to determine the first voltage difference between the second current open-circuit voltage and the current target open-circuit voltage. Here, the current target open-circuit voltage is the target open-circuit voltage corresponding to the latest instruction received. In some embodiments, when the latest instruction received is the first level-switch instruction, for example, the second level-switch instruction and the third level-switch instruction are not present, the current target open-circuit voltage may be the first target open-circuit voltage carried by the first level-switch instruction or determined according to the first level-switch instruction. In other embodiments, when the latest instruction received is the second level-switch instruction, for example, the first level-switch instruction is covered by the second level-switch instruction and the third level-switch instruction is not present, the current target open-circuit voltage may be the second target open-circuit voltage carried by the second level-switch instruction or determined according to the second level-switch instruction. In yet other embodiments, when the latest instruction received is the third level-switch instruction, for example, the first level-switch instruction and the second level-switch instruction are covered by the third level-switch instruction, the current target open-circuit voltage may be the third target open-circuit voltage carried by the third level-switch instruction or determined according to the third level-switch instruction.

In some embodiments, the first voltage difference may be a difference obtained by subtracting the current target open-circuit voltage from the second current open-circuit voltage. In other embodiments, the second voltage difference may also be a difference obtained by subtracting the second current open-circuit voltage from the current target open-circuit voltage.

The processor 103 in the apparatus 100 may be configured to determine whether the first voltage difference is in a preset voltage error range. The specific range of the preset voltage error range is not particularly limited and may be preset according to actual requirements. For instance, when higher accuracy is demanded, the preset voltage error range may be set smaller; conversely, when lower accuracy is acceptable, the preset voltage error range may be set larger. In some embodiments, the preset voltage error range may be, for example, [-0.01, 0.01]. In other embodiments, the preset voltage error range may be, for example, [-0.05, 0.05]. In still other embodiments, the preset voltage error range may be, for example, [-0.1, 0.1].

In some embodiments, the driver 104 of the apparatus 100 is also configured to: perform a charging correction or a discharging correction on the dimmable device when the first voltage difference is not in the preset voltage error range. Here, the first voltage difference is not in the preset voltage error range which may include that: the first voltage difference is smaller than the minimum value within the preset voltage error range, or the first voltage difference is greater than the maximum value within the preset voltage error range.

In some embodiments, it is required to perform the charging operation on the dimmable device to achieve the charging correction if the second current open-circuit voltage is smaller than the target open-circuit voltage. It is required to perform the discharging operation on the dimmable device to achieve the discharging correction if the second current open-circuit voltage is greater than the target open-circuit voltage.

In the embodiments of the present disclosure, the specific manners of the charging correction and discharging correction are not particularly limited and may be configured according to the actual requirements. In some embodiments, the charging correction may be to perform the charging operation on the dimmable device with a specific voltage or current to achieve a specific charging duration. The discharging correction may be to perform the discharging operation on the dimmable device with a specific voltage or current to achieve a specific discharging duration.

In some other embodiments, the charging correction may be to charge the dimmable device with a specific charge quantity; the discharging correction may be to discharge the dimmable device with a specific charge quantity. For example, the charging correction may be to charge the dimmable device with 1 milliampere hour (1 mAh), and the discharging correction may be to discharge the dimmable device with 1 mAh. Thus, a specific value of the charging charge quantity or the discharging charge quantity may be directly set for the charging correction or discharging correction, which simplifies the correction process and improves the control efficiency of the dimmable device.

In some embodiments, the sampler 102 is also configured to obtain a third current open-circuit voltage of the dimmable device. In some other embodiments, the processor 103 is also configured to calculate to determine a second voltage difference between the third current open-circuit voltage and the current target open-circuit voltage. In some other embodiments, the transmitter is also configured to send the second-stage level-switch completion signal when the second voltage difference is in the preset voltage error range.

Here, the third current open-circuit voltage of the dimmable device may be obtained by detection immediately after the charging correction or discharging correction is completed, or may be obtained by detection after resting for a specific duration upon completion of the charging correction or discharging correction. Similarly, the specific rest duration may be set according to actual conditions, for example, the specific rest duration may be the same as or different from the preset rest duration mentioned in the aforementioned embodiments.

In some embodiments, the driver 104 of the apparatus 100 may also be configured to: perform the charging correction or the discharging correction on the dimmable device when the second voltage difference is not in the preset voltage error range.

For example, the first voltage difference is a difference obtained by subtracting the current target open-circuit voltage from the second current open-circuit voltage. The preset voltage error range is [-0.05, 0.05]. The second voltage difference is a difference obtained by subtracting the current target open-circuit voltage from the third current open-circuit voltage. The charging correction is to charge the dimmable device by 1 mAh, and the discharging correction is to discharging the dimmable device by 1 mAh. The second current open-circuit voltage is denoted as Ux', the current target open-circuit voltage is denoted as Un', and the second current open-circuit voltage is denoted as Ux".

When the calculated first voltage difference Ux'-Un' is smaller than -0.05, the dimmable device is charged by 1 mAh and then the third current open-circuit voltage is detected. If the second voltage difference Ux" - Un' is in the range of [-0.05, 0.05], the charging correction is completed and a second-stage level-switch completion signal is sent. If it is determined that the second voltage difference Ux" - Un' remains smaller than -0.05, then continue charging the dimmable device by 1mAh, and then proceed to detect the current open-circuit voltage and calculate the difference between the current open-circuit voltage and the current target open-circuit voltage. Repeat this process until the difference is in the range of [-0.05, 0.05], after which the second-stage level-switch completion signal is sent. Similarly, when the calculated first voltage difference Ux'-Un' is greater than 0.05, the dimmable device is discharged by 1 mAh and then the third current open-circuit voltage is detected. If the second voltage difference Ux'-Un' is in the range of [-0.05, 0.05], the discharging correction is completed and the second-stage level-switch completion signal is sent. If it is determined that the second voltage difference Ux'-Un' remains greater than 0.05, then continue discharging the dimmable device by 1 mAh, and then proceed to detect the current open-circuit voltage, and calculate the difference between the current open-circuit voltage and the current target open-circuit voltage. Repeat this process until the difference is in the range of [-0.05, 0.05], and then the second-stage level-switch completion signal is sent.

Under normal circumstances, the lowest level and the highest level of the dimmable device correspond to the dimmable device's fully-discharged and fully-charged states respectively. The level-switching and color-changing results at this time are most in line with the user's expectations, that is, an error between the actual color-changing effect of the device and the color-changing effect expected by the user is small. Thus, after the level-switching is completed, if the current level of the dimmable device corresponds to the lowest level or the highest level, then the second-stage level-switch completion signal can be directly sent to the signal transceiver (such as the terminal platform) to end the level-switching and color-changing process. If, after the level-switching is completed, the current level of the dimmable device is not the lowest level or the highest level, for example, the current level is an intermediate level other than the lowest level and the highest level, then the color-changing effect of the intermediate level may not meet the user's expectations. For example, an error between the actual color-changing effect of the device and the color-changing effect expected by the user is large. Thus, it is required, after the level-switching is completed, to further determine the error between the actual color-changing effect of the device and the color-changing effect expected by the user based on the voltage difference between the current open-circuit voltage and the target open-circuit voltage. If the voltage difference is in the preset voltage error range, it is considered that the error between the two is small and can meet the user's expectations. Then, the second-stage level-switch completion signal is sent to the signal transceiver (such as a terminal platform) to terminate the level-switching and color-changing process. If the voltage difference is not in the preset voltage error range, that is, the voltage difference lies outside the preset voltage error range, then it is required to correct the dimmable device, such as through the charging correction or the discharging correction. By applying these corrections, the device's current open-circuit voltage is changed and obtained, for example, through a detection of the third current open-circuit voltage, until the voltage difference between the corrected third current open-circuit voltage and the target open-circuit voltage is in the preset voltage error range, the second-stage level-switch completion signal is sent to the signal transceiver (such as the terminal platform) to conclude the level-switching and color-changing process. In this way, the accuracy of the level-switching and color-changing process of the dimmable device can be improved, thereby the user experience is improved.

FIG. 2 shows a schematic block diagram of a level-switch control system for a dimmable device provided in an embodiment of the present disclosure. As shown in FIG. 2, the level-switch control system may include a terminal platform 200 and the above-mentioned level-switch control apparatus 100. Information interaction is performed between the terminal platform 200 and the level-switch control apparatus 100.

The type of the terminal platform 200 is not particularly limited. In some embodiments, the terminal platform 200 may include a remote control, a mobile terminal device, or a central control system of a vehicle.

In some embodiments, the terminal platform 200 may exchange information with the receiver 101 in the level-switch control apparatus 100. Exemplarily, the terminal platform 200 may send a level-switch instruction (including at least one of a first level-switch instruction, a second level-switch instruction, and a third level-switch instruction), and the receiver 101 may receive the level-switch instruction. In other embodiments, the terminal platform 200 may also exchange information with the transmitter in the level-switch control apparatus 100. Exemplarily, the transmitter may send a level-switch completion signal (including at least one of a first-stage level-switch completion signal and a second-stage level-switch completion signal), and the terminal platform 200 may receive the level-switch completion signal. Thus, through the information interaction between the terminal platform and the level-switch control apparatus, the regulation and control of the level-switch control apparatus can be achieved by the terminal platform.

In the embodiments provided in the present disclosure, it should be understood that the disclosed system and apparatus may be implemented in other ways. For example, the apparatus embodiments described above are only schematic. For example, the division of the devices is only a logical function division. In actual implementation, these devices may be fully or partially integrated into a physical entity, or may be physically separated, or may also be other division methods, such as multiple devices or units may be combined or integrated into another system, or some features may be ignored or not executed. Another point is that the mutual coupling or direct coupling or communication connection shown or discussed may be an indirect coupling or communication connection through some interfaces, components or devices, which may be electrical or other forms.

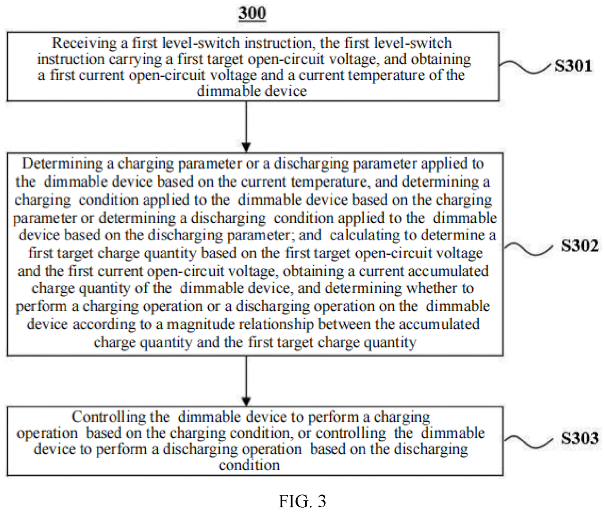

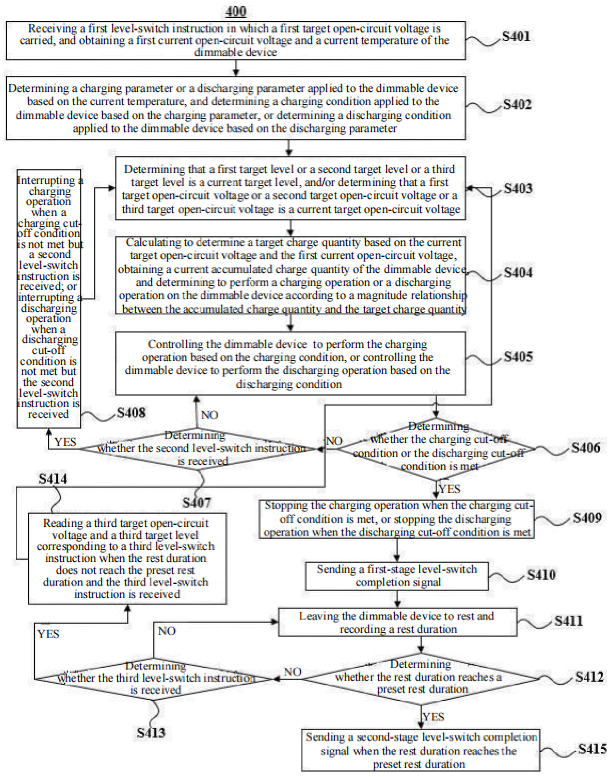

The level-switch control apparatus and system for the dimmable device provided in the embodiments of the present disclosure are described in detail above with reference to FIGS. 1 and 2. The level-switch control method provided by the embodiment of the present disclosure will be described in detail below in conjunction with FIGS. 3 to 5. The corresponding methods 300 and 400 shown in FIGS. 3 to 5 may be executed in an apparatus 100 such as that shown in FIG. 1. It should be understood that the description of the level-switch control method embodiment corresponds to the description of the apparatus embodiment. Thus, for the contents not described in detail here, reference may be made to the apparatus embodiment above. For the sake of brevity, no further elaboration will be provided here.

FIG. 3 shows a schematic flow chart of a level-switch control method for the dimmable device provided by an embodiment of the present disclosure.

As shown in FIG. 3, the embodiment of the present disclosure provides a level-switch control method 300 for a dimmable device. The method 300 may include the following steps: S301, receiving a first level-switch instruction, where the first level-switch instruction carries a first target open-circuit voltage, and obtaining a first current open-circuit voltage and a current temperature of the dimmable device; S302, determining a charging parameter or a discharging parameter applied to the dimmable device based on the current temperature, and determining a charging condition applied to the dimmable device based on the charging parameter or determining a discharging condition applied to the dimmable device based on the discharging parameter; and calculating to determine a first target charge quantity based on the first target open-circuit voltage and the first current open-circuit voltage, obtaining a current accumulated charge quantity of the dimmable device, and determining to perform a charging operation or a discharging operation on the dimmable device according to a magnitude relationship between the accumulated charge quantity and the first target charge quantity; and S303, controlling the dimmable device to perform a charging operation based on the charging condition, or controlling the dimmable device to perform a discharging operation based on the discharging condition.

In the embodiment of the present disclosure, the current temperature of the dimmable device is obtained, and the charging parameter or the discharging parameter applied to the dimmable device is determined based on the current temperature, the charging condition used when charging the dimmable device is further determined based on the charging parameter, or determining the discharging condition used when discharging the dimmable device is further determined based on the discharging parameter. That is, the impact of temperature on the color-changing process (charging operation or discharging operation) of the dimmable device has been taken into account, the charging condition or discharging condition is determined according to the current temperature of the dimmable device, so that a more effective level-switching control of the dimmable device at different temperatures is achieved. Thereby the color-changing reliability of the dimmable device can be more effectively enhanced, and the user experience is improved.

In some embodiments, the method 300 may also include steps of: determining the first target level to be a current target level, and/or determining the first target open-circuit voltage as a current target open-circuit voltage. Hereby, when receiving the level-switch instruction, a new instruction can be promptly refreshed and determined as a target instruction, such as a target level and/or a target open-circuit voltage, to improve the accuracy of controlling the dimmable device.

In some embodiments, the step S302 may specifically include the following steps: determining a temperature range corresponding to the current temperature; and determining the charging parameter or the discharging parameter applied to the dimmable device according to the temperature range and a corresponding relationship between the temperature range and the charging parameter or the discharging parameter. For example, the charging parameter applied to the dimmable device is determined according to the temperature range and the corresponding relationship between the temperature range and the charging parameter. Or alternatively, the discharging parameter applied to the dimmable device is determined according to the temperature range and the corresponding relationship between the temperature range and the discharging parameter. Thus, the corresponding charging parameter or discharging parameter in different temperature ranges can be pre-set, and when the detected current temperature falls into the corresponding temperature range, the charging parameter or the discharging parameter corresponding to the temperature range can be directly read, simplifying the determination process of the charging parameter and the discharging parameter, which is conducive to accelerating the level-switching control process of the dimmable device and improving the color-changing rate of the dimmable device.

In some embodiments, the step S302 may specifically include the following steps: determining a temperature range corresponding to the current temperature; determining a transmittance variation range of the dimmable device based on the temperature range and a corresponding relationship between the temperature range and the transmittance variation range; determining the charging parameter or the discharging parameter applied to the dimmable device according to the transmittance variation range and a corresponding relationship between the transmittance variation range and the charging parameter or the discharging parameter. For example, the charging parameter applied to the dimmable device is determined according to the transmittance variation range and the corresponding relationship between the transmittance variation range and the charging parameter. Or alternatively, the discharging parameter applied to the dimmable device is determined according to the transmittance variation range and the corresponding relationship between the transmittance variation range and the discharging parameter. In this case, considering the impact of temperature on the transmittance variation range of the dimmable device, different transmittance variation ranges corresponding to different temperature ranges are determined, and then the charging parameter or the discharging parameter are determined by the transmittance variation ranges. Thereby, when the dimmable device is controlled (charged or discharged) using the charging parameter or the discharging parameter determined in the above manner, the transmittance variation result of the dimmable device can be made more reliable, thus the user experience is improved.

In step S301, no particular restriction is imposed on the sequence of receiving the first level-switch instruction and obtaining the first current open-circuit voltage and current temperature of the dimmable device. In some embodiments, the step of receiving the first level-switch instruction may be executed first. That is, the first current open-circuit voltage and current temperature of the dimmable device are obtained after the first level-switch instruction is received. In other embodiments, the step of obtaining the first current open-circuit voltage and current temperature of the dimmable device may be executed first. That is, the step of obtaining the first current open-circuit voltage and current temperature of the dimmable device is followed by the step of receiving the first level-switch instruction. In some other embodiments, the steps of receiving the first level-switch instruction and obtaining the first current open-circuit voltage and current temperature of the dimmable device may also be performed simultaneously. In addition, no particular restriction is imposed on the sequence of obtaining the first current open-circuit voltage and the current temperature of the dimmable device. For example, the first current open-circuit voltage and the current temperature of the dimmable device may be obtained at the same time. Or alternatively, the first current open-circuit voltage of the dimmable device may be obtained first and then the current temperature of the dimmable device is obtained. Or alternatively, the current temperature of the dimmable device may be obtained first and then the first current open-circuit voltage of the dimmable device is obtained. In addition, the obtaining of the first current open-circuit voltage and the current temperature may be performed simultaneously either before receiving the first level-switch instruction or after receiving the first level-switch instruction, or may be conducted separately before and after receiving the first level-switch instruction, with no restrictions imposed in this regard.

In step S302, no particular restriction is imposed on the sequence of determining the charging parameter or the discharging parameter, the charging condition or the discharging condition, and determining the charging operation or the discharging operation. In some embodiments, the operations of determining the charging parameter or the discharging parameter applied to the dimmable device based on the current temperature, and determining the charging condition applied to the dimmable device based on the charging parameter, or determining the discharging condition applied to the dimmable device based on the discharging parameter may be performed first. Then, based on the first target open-circuit voltage and the first current open-circuit voltage, the first target charge quantity is calculated and determined, and the current accumulated charge quantity of the dimmable device is obtained, and according to the magnitude relationship between the accumulated charge quantity and the first target charge quantity, it is determined to perform the charging operation or the discharging operation on the dimmable device. In other embodiments, the operations of calculating to determine the first target charge quantity based on the first target open-circuit voltage and the first current open-circuit voltage, determining the current accumulated charge quantity of the dimmable device, and determining whether to perform the charging operation or the discharging operation on the dimmable device according to the magnitude relationship between the accumulated charge quantity and the first target charge quantity may be performed first. Then, based on the current temperature, the charging parameter or the discharging parameter applied to the dimmable device is determined, and based on the charging parameter, the charging condition applied to the dimmable device is determined, or alternatively, based on the discharging parameter, the discharging condition applied to the dimmable device is determined. In some other embodiments, the operations of determining the charging parameter or the discharging parameter applied to the dimmable device based on the current temperature, and determining the charging condition applied to the dimmable device based on the charging parameter, or determining the discharging condition applied to the dimmable device based on the discharging parameter may be performed simultaneously. Meanwhile, the operations of calculating to determine the first target charge quantity based on the first target open-circuit voltage and the first current open-circuit voltage, determining the current accumulated charge quantity of the dimmable device, and determining whether to perform the charging operation or the discharging operation on the dimmable device according to the magnitude relationship between the accumulated charge quantity and the first target charge quantity are also performed simultaneously.

FIG. 4 shows another schematic flow chart of a level-switch control method for a dimmable device provided in an embodiment of the present disclosure. The method 400 may be understood as an extension of the method 300, and the method 400 may be executed in parallel with the method 300, or may also be executed after the method 300.

As shown in FIG. 4, the embodiment of the present disclosure provides another level-switch control method 400 for the dimmable device. The method 400 may include the following steps: S401, receiving a first level-switch instruction, where the first level-switch instruction carries a first target open-circuit voltage, and obtaining a first current open-circuit voltage and a current temperature of the dimmable device; S402, determining a charging parameter or a discharging parameter applied to the dimmable device based on the current temperature, and determining a charging condition applied to the dimmable device based on the charging parameter, or determining a discharging condition applied to the dimmable device based on the discharging parameter; S403, determining that a first target level or a second target level or a third target level is a current target level, and/or determining that the first target open-circuit voltage or a second target open-circuit voltage or a third target open-circuit voltage is a current target open-circuit voltage; S404, calculating to determine a target charge quantity based on the current target open-circuit voltage and the first current open-circuit voltage, obtaining a current accumulated charge quantity of the dimmable device, and determining whether to perform a charging operation or a discharging operation on the dimmable device according to a magnitude relationship between the accumulated charge quantity and the target charge quantity; and S405, controlling the dimmable device to perform the charging operation based on the charging condition, or controlling the dimmable device to perform the discharging operation based on the discharging condition.

Step S401 and step S405 in the method 400 may correspond to step S301 and step S303 in the method 300 respectively, and for the sake of brevity, no further elaboration will be provided here.

The level-switch control method 400 provided in the embodiment of the present disclosure includes the step S403 of: determining that the first target level, the second target level, or the third target level is the current target level, and/or determining that the first target open-circuit voltage, the second target open-circuit voltage, or the third target open-circuit voltage is the current target open-circuit voltage.

In some embodiments, the step S403 may include: determining that the first target level is the current target level, and/or determining that the first target open-circuit voltage is the current target open-circuit voltage. In this case, the latest instruction received corresponds to the first level-switch instruction. In other embodiments, step S403 may include: determining that the second target level is the current target level, and/or determining that the second target open-circuit voltage is the current target open-circuit voltage. In this case, the latest instruction received corresponds to the second level-switch instruction. In some other embodiments, step S403 may include: determining that the third target level is the current target level, and/or determining that the third target open-circuit voltage is the current target open-circuit voltage. In this case, the latest instruction received corresponds to the third level-switch instruction.

Thus, when the latest level-switch instruction is received, the instruction can be promptly refreshed to be the latest target instruction, for example, the target level and/or target open-circuit voltage corresponding to the latest instruction are refreshed to be the latest target level and/or target open-circuit voltage. Thus, in the subsequent method flow, the latest target open-circuit voltage and/or target level may be used to calculate or determine related quantities, etc., so as to improve the accuracy of controlling the dimmable device.

The level-switch control method 400 provided in the embodiment of the present disclosure includes the step S404 of: calculating to determine the target charge quantity based on the current target open-circuit voltage and the first current open-circuit voltage, obtaining the current accumulated charge quantity of the dimmable device, and determining whether to perform the charging operation or the discharging operation on the dimmable device according to the magnitude relationship between the accumulated charge quantity and the target charge quantity.

In some embodiments, the step S404 may include: calculating to determine the first target charge quantity based on the first target open-circuit voltage and the first current open-circuit voltage, obtaining the current accumulated charge quantity of the dimmable device, and determining whether to perform the charging operation or the discharging operation on the dimmable device according to the magnitude relationship between the accumulated charge quantity and the first target charge quantity. In this case, the latest instruction received corresponds to the first level-switch instruction. In some other embodiments, step S404 may include: calculating to determine the second target charge quantity based on the second target open-circuit voltage and the first current open-circuit voltage, obtaining the current accumulated charge quantity of the dimmable device, and determining whether to perform the charging operation or the discharging operation on the dimmable device according to the magnitude relationship between the accumulated charge quantity and the second target charge quantity. In this case, the latest instruction received corresponds to the second level-switch instruction. In some other embodiments, step S404 may include: calculating to determine the third target charge quantity based on the third target open-circuit voltage and the first current open-circuit voltage, obtaining the current accumulated charge quantity of the dimmable device, and determining whether to perform the charging operation or the discharging operation on the dimmable device according to the magnitude relationship between the accumulated charge quantity and the third target charge quantity. In this case, the latest instruction received corresponds to the third level-switch instruction.

In the embodiments of the present disclosure, the execution sequence of steps S402 and S404 is not particularly limited. In the method 400, steps S402 and S404 may be executed in the sequence of performing S402 first followed by S404 as shown in FIG. 4. In other embodiments, step S404 may be executed first followed by S402. In other embodiments, steps S402 and S404 may be executed simultaneously.

In the embodiment of the present disclosure, the execution sequence of steps S402 and S403 is not particularly limited. In the method 400, steps S402 and S403 may be executed in the sequence of performing S402 first followed by S404 as shown in FIG. 4. In other embodiments, step S403 may be executed first followed by S402. In other embodiments, steps S402 and S403 may be executed simultaneously.

As shown in FIG. 4, the level-switch control method 400 provided in the embodiment of the present disclosure may also include the following steps S406 to S408. In step S406, it is determined whether the charging cut-off condition or the discharging cut-off condition is met. In step S407, it is determined whether the second level-switch instruction is received. In step S408, the charging operation is interrupted when the charging cut-off condition is not met but the second level-switch instruction is received; or alternatively, the discharging operation is interrupted when the discharging cut-off condition is not met but the second level-switch instruction is received.

In step S406, in some embodiments, the operation for determining whether the dimmable device meets the charging cut-off condition or the discharging cut-off condition may be executed after a specific time period following the commencement of the charging or discharging operation. The specific time period is not particularly limited. For example, determining whether the charging cut-off condition or the discharging cut-off condition is met may be performed 0.5 s after the charging or discharging operation starts, or 1 s after the charging or discharging operation starts. Generally, in an initial stage of the charging or discharging operation, the dimmable device may have a small voltage, current or charge quantity. Delaying the execution time of determining the cut-off condition to a specific time after the charging or discharging operation can prevent the situation where the dimmable device is mistakenly judged to meet the cut-off condition and the charging or discharging operation is mistakenly cut off in the initial stage of the charging or discharging operation. Thus, the accuracy and effectiveness for controlling the dimmable device is improved.

After step S407, when it is determined that the second level-switch instruction is not received, the method may continue to return to step S405 to continue to perform the charging or discharging operation on the dimmable device.

In some embodiments, after step S408, the method may also include steps of: updating an instruction modification count of the second level-switch instruction and determining whether the instruction modification count is smaller than or equal to a preset modification threshold; and reading the open-circuit voltage corresponding to the second level-switch instruction as the second target open-circuit voltage when the instruction modification count is smaller than or equal to the preset modification threshold. In other embodiments, when the instruction modification count is greater than the preset modification threshold, the open-circuit voltage corresponding to the second level-switch instruction is not read, and the charging or discharging operation is continued. Therefore, by providing a determination of the instruction modification count, and reading the open-circuit voltage corresponding to the second level-switch instruction as the target open-circuit voltage (that is, performing an interruption operation to update the target open-circuit voltage for the level-switching and color-changing process according to the new target level) only when the instruction modification count is not greater than the preset modification threshold while refraining from the interruption operation (that is, not updating the target open-circuit voltage) when the instruction modification count is greater than the preset modification threshold, it is possible to avoid the level-switching process from being interrupted too frequently during the level-switching control process, which improves the user experience and is conducive to prolonging the service life of the dimmable device.

In some embodiments, after step S408, the method may also include steps of: determining the second target level as the current target level, and/or determining the second target open-circuit voltage as the current target open-circuit voltage; calculating to determine the second target charge quantity based on the second target open-circuit voltage and the first current open-circuit voltage, and obtaining the current accumulated charge quantity of the dimmable device, and determining to perform the charging operation or the discharging operation on the dimmable device according to the magnitude relationship between the accumulated charge quantity and the second target charge quantity; and controlling the dimmable device to perform the charging operation based on the charging condition, or alternatively, controlling the dimmable device to perform the discharging operation based on the discharging condition.

The open-circuit voltage is a terminal voltage of the dimmable device in an open circuit or a disconnected state. Under normal circumstances, in the initial stage of the dimmable device forming the open circuit or the disconnected state, the terminal voltage of the dimmable device has not yet stabilized. If the terminal voltage detected at this time is used as the open-circuit voltage of the device, it is not accurate enough. Usually, after waiting for a specific time, such as 1 minute or 2 minutes, the terminal voltage of the device tends to stabilize. It is more accurate to use the terminal voltage detected after waiting for a specific time as the open-circuit voltage of the device. In this case, when the charging cut-off condition or the discharging cut-off condition is not met but the second level-switch instruction is received, the charging or discharging operation is interrupted (i.e., the interruption operation), and then the second target open-circuit voltage carried by the second level-switch instruction and the first current open-circuit voltage initially measured are directly used as the basis for calculating to determine a new target charge quantity. This allows the process to proceed to a new level-switching process according to the new target charge quantity, and continue to level-switch and change the color of the dimmable device. Thus, after the above interruption operation, there is no need to re-detect the current open-circuit voltage of the device. Instead, the first current open-circuit voltage initially measured is directly used as the basis for calculating the target charge quantity. This approach can effectively avoid the instability (inaccuracy) of the current open-circuit voltage detected immediately during the interruption operation, improving the accuracy of the target charge quantity calculation and consequently enhancing the accuracy of the level-switching and color-changing process of the dimmable device.

In some embodiments, the step of determining to perform the charging operation or the discharging operation on the dimmable device according to the magnitude relationship between the accumulated charge quantity and the second target charge quantity includes the following steps: determining the magnitude relationship between the accumulated charge quantity and the second target charge quantity; determining to perform the charging operation on the dimmable device when the accumulated charge quantity is smaller than the second target charge quantity; determining to perform the discharging operation on the dimmable device when the accumulated charge quantity is greater than the second target charge quantity; and determining to perform the charging operation or the discharging operation on the dimmable device when the accumulated charge quantity is equal to the second target charge quantity. Thus, when receiving the second level-switch instruction, the charging operation or the discharging operation on the dimmable device can be determined directly by comparing the current accumulated charge quantity with the second target charge quantity, without the need for a complicated calculation process (for example, calculating a difference between the accumulated charge quantity and the target charge quantity, and then determining to perform the charging operation or the discharging operation on the dimmable device according to the difference), which simplifies the level-switching control process of the dimmable device, and facilitates improving the color-changing rate of the dimmable device, etc.

As shown in FIG. 4, the level-switch control method 400 provided in the embodiment of the present disclosure may also include a step S409 of stopping the charging operation when the charging cut-off condition is met, or stopping the discharging operation when the discharging cut-off condition is met. Thus, the charging or discharging operation process of the dimmable device can be stopped in time according to the charging cut-off condition or the discharging cut-off condition, to prevent the device from being over-charged or over-discharged, thereby the service life of the device can be prolonged.

As shown in FIG. 4, the level-switch control method 400 provided in the embodiment of the present disclosure may also include a step S410 of sending a first-stage level-switch completion signal. Thus, the signal indicating that the first-stage level-switching is completed may be transmitted to the signal transceiver (e.g., the terminal platform) in time to trigger subsequent control steps of the dimmable device.

As shown in FIG. 4, the level-switch control method 400 provided in the embodiment of the present disclosure may also include a step S411 of leaving the dimmable device to rest and recording a rest duration, and a step S412 of determining whether the rest duration reaches a preset rest duration.

As shown in FIG. 4, the level-switch control method 400 provided in the embodiment of the present disclosure may also include a step S413 of determining whether a third level-switch instruction is received; a step S414 of reading a third target open-circuit voltage and a third target level corresponding to the third level-switch instruction when the rest duration does not reach the preset rest duration and the third level-switch instruction is received; and a step S415 of sending a second-stage level-switch completion signal when the rest duration reaches the preset rest duration.

After step S414, it may also return to re-execute steps S403 to S405. In this case, step S403 may specifically include: a step of determining that the third target level is the current target level, and/or determining that the third target open-circuit voltage is the current target open-circuit voltage. The current target open-circuit voltage used in step S404 corresponds to the third target open-circuit voltage. Then in this case, step S404 may specifically include steps of calculating to determine a third target charge quantity based on the third target open-circuit voltage and the first current open-circuit voltage, obtaining the current accumulated charge quantity of the dimmable device, and determining whether to perform the charging operation or the discharging operation on the dimmable device according to the magnitude relationship between the accumulated charge quantity and the third target charge quantity.

As described above, in the initial stage when the dimmable device forms an open circuit or a disconnected state, the detected open-circuit voltage is unstable (inaccurate). In this case, after stopping the charging or discharging operation, the dimmable device is allowed to wait for a preset rest duration before sending the second-stage level-switch completion signal, i.e., sending the signal indicating the end of the level-switch color-changing process to the signal transceiver (e.g., the terminal platform). Thereafter, if a new level-switch instruction is received, the aforementioned level-switching control process may be performed again, that is, the current open-circuit voltage is re-detected, and the detected open-circuit voltage at this time is also more accurate and stable. If the third level-switch instruction is received within the preset rest duration, then similar to the above interruption operation, in this case, the third target open-circuit voltage carried by the received third level-switch instruction and the first current open-circuit voltage initially measured are directly used as the basis to calculate to determine the new target charge quantity. This allows the process to proceed to a new level-switch process according to the new target charge quantity, and continue to level-switch and change the color of the dimmable device. Therefore, in the above process, when the third level-switch instruction is received within the preset rest duration, there is no need to re-detect the current open-circuit voltage of the device. Instead, the initially measured first current open-circuit voltage is directly used as the basis for calculating the target charge quantity. This effectively avoids the instability (inaccuracy) of the detected current open-circuit voltage caused by insufficient rest duration of the device which leads to unstable terminal voltage. Consequently, the accuracy of the target charge quantity calculation is enhanced, and thus the accuracy of the level-switching and color-changing process of the dimmable device is improved.

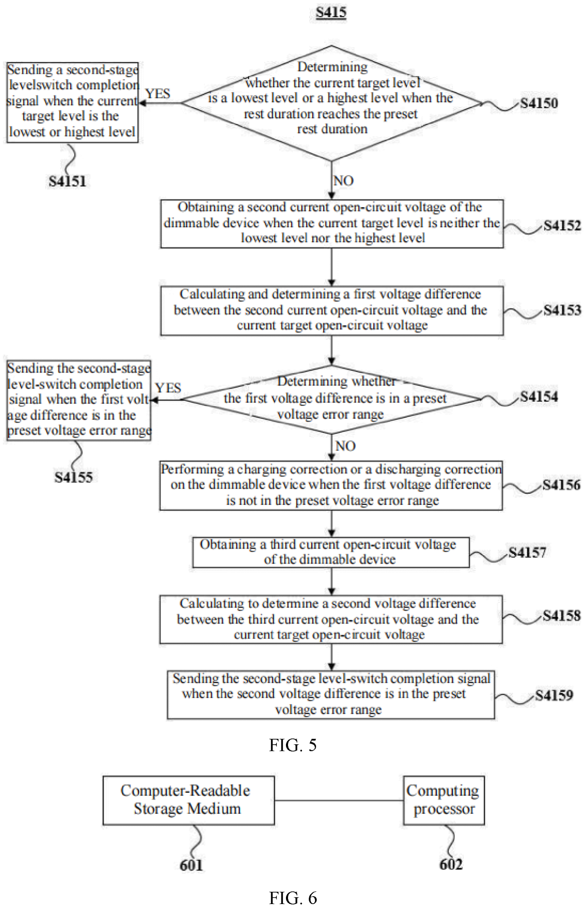

FIG. 5 shows an exemplary flow chart of step S415 in FIG. 4. It can be understood that step S415 may or may not include the schematic flow shown in FIG. 5. That is, illustratively, when the relevant process is executed according to method 400, step 415 may be executed directly, or may be executed according to some or all of the steps shown in FIG. 5.

As shown in FIG. 5, the step S415 may include a step S4150 of determining whether the current target level is the lowest level or the highest level when the rest duration reaches the preset rest duration; and a step S4151 of sending the second-stage level-switch completion signal when the current target level is the lowest level or the highest level.

In step S4150, it is determined whether the current target level is a lowest level or a highest level. In some embodiments, when the latest instruction received is a first level-switch instruction, the current target level may be a first target level carried by the first level-switch instruction or determined according to the first level-switch instruction. In other embodiments, when the latest instruction received is a second level-switch instruction, the current target level may be a second target level carried by the second level-switch instruction or determined according to the second level-switch instruction. In still other embodiments, when the latest instruction received is a third level-switch instruction, the current target level may be a third target level carried by the third level-switch instruction or determined according to the third level-switch instruction.

The lowest level and the highest level correspond to the dimmable device's lowest and highest transmittance states, respectively. In some embodiments, the lowest level may be the level corresponding to the dimmable device in the lowest transmittance state, and accordingly, the highest level is the level corresponding to the dimmable device in the highest transmittance state. In other embodiments, the lowest level may be the level corresponding to the dimmable device in the highest transmittance state, and accordingly, the highest level is the level corresponding to the dimmable device in the lowest transmittance state. Here, the so-called highest transmittance state and the lowest transmittance state may refer to the maximum and minimum light transmittance states that the dimming device itself can achieve, or may refer to the artificially defined highest and lowest light transmittance states at which the dimming device is instructed to stop operating.

As shown in FIG. 5, in step S415, the following may also be included: a step S4152 of obtaining a second current open-circuit voltage of the dimmable device when the current target level is neither the lowest level nor the highest level; a step S4153 of calculating to determine a first voltage difference between the second current open-circuit voltage and the current target open-circuit voltage; a step S4154 of determining whether the first voltage difference is in a preset voltage error range; and a step S4155 of sending a second-stage level-switch completion signal when the first voltage difference is in the preset voltage error range.

As shown in FIG. 5, in step S415, the following may also be included: a step S4156 of performing a charging correction or a discharging correction on the dimmable device when the first voltage difference is not in the preset voltage error range.

As shown in FIG. 5, in step S415, the following may also be included: a step S4157 of obtaining a third current open-circuit voltage of the dimmable device; a step S4158 of calculating to determine a second voltage difference between the third current open-circuit voltage and the current target open-circuit voltage; and a step S4159 of sending the second-stage level-switch completion signal when the second voltage difference is in the preset voltage error range.

In some embodiments, in step S415, after step S4158, the following steps may also be included: performing the charging correction or the discharging correction on the dimmable device when the second voltage difference is not in the preset voltage error range; and returning to step S4157 and step 4158, and so on, until the difference between the current open-circuit voltage and the current target voltage is in the preset voltage error range, and then the charging correction or discharging correction on the dimmable device is completed.

Under normal circumstances, the lowest level and the highest level of the dimmable device correspond to the dimmable device's fully-discharged and fully-charged states respectively. The level-switching and color-changing results at this time are most in line with the user's expectations, that is, an error between the actual color-changing effect of the device and the color-changing effect expected by the user is small. Therefore, after the level-switching is completed, if the current level of the dimmable device corresponds to the lowest level or the highest level, then the second-stage level-switch completion signal can be directly sent to the signal transceiver (such as the terminal platform) to end the level-switching and color-changing process. If, after the level-switching is completed, the current level of the dimmable device is not the lowest level or the highest level, for example, the current level is an intermediate level other than the lowest level and the highest level, then the color-changing effect of the intermediate level may not meet the user's expectations. For example, an error between the actual color-changing effect of the device and the user's anticipated color-changing effect is large. Thus, it is required, after the level-switching is completed, to further determine the error between the actual color-changing effect of the device and the color-changing effect expected by the user based on the voltage difference between the current open-circuit voltage and the target open-circuit voltage. If the voltage difference is in the preset voltage error range, it is considered that the error between the two is small and can meet the user's expectations. Then, the second-stage level-switch completion signal is sent to the signal transceiver (such as a terminal platform) to terminate the level-switching and color-changing process. If the voltage difference is not in the preset voltage error range, that is, the voltage difference lies outside the preset voltage error range, then it is required to correct the dimmable device, such as through the charging correction or the discharging correction. By applying these corrections, the device's current open-circuit voltage is changed and obtained, for example, through a detection of the third current open-circuit voltage, until the voltage difference between the corrected third current open-circuit voltage and the target open-circuit voltage is in the preset voltage error range, then the second-stage level-switch completion signal is sent to the signal transceiver (such as the terminal platform) to conclude the level-switching and color-changing process. In this way, the accuracy of the level-switching and color-changing process of the dimmable device can be improved, thereby the user experience is improved.

FIG. 6 shows a schematic block diagram of a computer-readable storage medium and a computing processor provided in an embodiment of the present disclosure. As shown in FIG. 6, an embodiment of the present disclosure also provides a computer-readable storage medium 601, on which a computer program is stored. The computer program, when executed by a computing processor 602, causes the level-switch control method for the dimmable device provided in the above embodiment, such as method 300 or method 400, to be implemented. It should be understood that the description of the level-switch control method embodiment corresponds to the description of the apparatus embodiment. Thus, for the contents not described in detail here, reference may be made to the apparatus embodiment above. For the sake of brevity, no further elaboration will be provided here.

In the embodiment of the present disclosure, the type of the computer-readable storage medium 601 is not particularly limited. In some embodiments, the computer-readable storage medium 601 may include: a U disk, a mobile hard disk, a read-only memory (ROM), a random-access memory (RAM), a magnetic disk or an optical disk, and other media that can store program codes.

In the embodiment of the present disclosure, the type of the computing processor 602 is also not particularly limited. In some embodiments, the computing processor 602 may include a controller, a mobile phone, a computer or other intelligent equipment.

The above describes merely some specific implementations of the present disclosure, and the protection scope of the present disclosure is not limited thereto. Any modifications or substitutions that can be easily conceived by person skilled in the art within the technical scope disclosed in the present disclosure, which shall all be covered within the protection scope of the present disclosure.

### Industrial Applicability:

The present disclosure provides a level-switch control method and a related apparatus for a dimmable device, which takes into account the impact of temperature on the color-changing process of the dimmable device, so that the color-changing reliability of the device is more effectively enhanced, and thus the user experience is improved.

## Claims

1. A level-switch control method for a dimmable device, **characterized by** comprising:
receiving a first level-switch instruction, the first level-switch instruction carrying a first target open-circuit voltage, and obtaining a first current open-circuit voltage and a current temperature of the dimmable device;
determining a charging parameter or a discharging parameter applied to the dimmable device based on the current temperature, and determining a charging condition applied to the dimmable device based on the charging parameter or determining a discharging condition applied to the dimmable device based on the discharging parameter; calculating to determine a first target charge quantity based on the first target open-circuit voltage and the first current open-circuit voltage, obtaining a current accumulated charge quantity of the dimmable device, and determining whether to perform a charging operation or a discharging operation on the dimmable device according to a magnitude relationship between the accumulated charge quantity and the first target charge quantity; and
controlling the dimmable device to perform a charging operation based on the charging condition, or controlling the dimmable device to perform a discharging operation based on the discharging condition.

2. The level-switch control method according to claim 1, **characterized in that** the determining the charging parameter or the discharging parameter applied to the dimmable device based on the current temperature comprises:
determining a temperature range corresponding to the current temperature; and
determining the charging parameter or the discharging parameter applied to the dimmable device according to the temperature range and a corresponding relationship between the temperature range and the charging parameter or the discharging parameter.

3. The level-switch control method according to claim 1, **characterized in that** the determining the charging parameter or the discharging parameter applied to the dimmable device based on the current temperature comprises:
determining a temperature range corresponding to the current temperature;
determining a transmittance variation range of the dimmable device based on the temperature range and a corresponding relationship between the temperature range and the transmittance variation range; and
determining the charging parameter or the discharging parameter applied to the dimmable device according to the transmittance variation range and a corresponding relationship between the transmittance variation range and the charging parameter or the discharging parameter.

4. The level-switch control method according to claim 1, **characterized in that** the charging parameter comprises at least one of a maximum charging voltage, a maximum charging current, a charging cut-off current and a charging cut-off duration, or alternatively, the discharging parameter comprises at least one of a maximum discharging voltage, a maximum discharging current, a discharging cut-off current and a discharging cut-off duration.

5. The level-switch control method according to claim 1, **characterized in that** the first level-switch instruction further carries a first target level, and the level-switch control method further comprises:
determining that the first target level is a current target level, and/or determining that the first target open-circuit voltage is a current target open-circuit voltage.

6. The level-switch control method according to claim 5, **characterized in that** after the controlling the dimmable device to perform the charging operation based on the charging condition, or after the controlling the dimmable device to perform the discharging operation based on the discharging condition, the level-switch control method further comprises:
interrupting the charging operation when a charging cut-off condition is not met but a second level-switch instruction is received, or interrupting the discharging operation when a discharging cut-off condition is not met but the second level-switch instruction is received.

7. The level-switch control method according to claim 6, **characterized in that** the second level-switch instruction carries a second target open-circuit voltage and a second target level, and after the interrupting the charging operation when a charging cut-off condition is not met but a second level-switch instruction is received, or the interrupting the discharging operation when a discharging cut-off condition is not met but the second level-switch instruction is received, the level-switch control method further comprises:
determining that the second target level is the current target level, and/or determining that the second target open-circuit voltage is the current target open-circuit voltage;
calculating to determine a second target charge quantity based on the second target open-circuit voltage and the first current open-circuit voltage, obtaining the current accumulated charge quantity of the dimmable device, and determining whether to perform the charging operation or the discharging operation on the dimmable device according to a magnitude relationship between the accumulated charge quantity and the second target charge quantity; and
controlling the dimmable device to perform the charging operation based on the charging condition, or controlling the dimmable device to perform the discharging operation based on the discharging condition.

8. The level-switch control method according to claim 5 or 7, **characterized in that** after the controlling the dimmable device to perform the charging operation based on the charging condition, or after the controlling the dimmable device to perform the discharging operation based on the discharging condition, the level-switch control method further comprises:
stopping the charging operation when a charging cut-off condition is met, or stopping the discharging operation when a discharging cut-off condition is met.

9. The level-switch control method according to claim 4, **characterized in that** the charging condition comprises at least one of following conditions: a current charging current of the dimmable device is smaller than or equal to the maximum charging current, and a current charging voltage of the dimmable device is smaller than or equal to the maximum charging voltage; or
alternatively, the discharging condition comprises at least one of following conditions: a current discharging current of the dimmable device is smaller than or equal to the maximum discharging current, and a current discharging voltage of the dimmable device is smaller than or equal to the maximum discharging voltage.

10. The level-switch control method according to claim 6 or 8, **characterized in that** the charging cut-off condition is determined based on the charging parameter, and the charging parameter comprise at least one of a maximum charging voltage, a maximum charging current, a charging cut-off current and a charging cut-off duration, wherein the charging cut-off condition comprises at least one of the following conditions: a current charging current of the dimmable device is smaller than or equal to the charging cut-off current, the current accumulated charge quantity of the dimmable device is not smaller than the first target charge quantity or the second target charge quantity, and a current accumulated charging duration of the dimmable device is greater than or equal to the charging cut-off duration; or
alternatively, the discharging cut-off condition is determined based on the discharging parameter, and the discharging parameter comprise at least one of a maximum discharging voltage, a maximum discharging current, a discharging cut-off current and a discharging cut-off duration, wherein the discharging cut-off condition comprises at least one of the following conditions: a current discharging current of the dimmable device is smaller than or equal to the discharging cut-off current, the current accumulated charge quantity of the dimmable device is not greater than the first target charge quantity or the second target charge quantity, and a current accumulated discharging duration of the dimmable device is greater than or equal to the discharging cut-off duration.

11. The level-switch control method according to claim 8, **characterized in that** after the stopping the charging operation when the charging cut-off condition is met, or after the stopping the discharging operation when the discharging cut-off condition is met, the level-switch control method further comprises:
sending a first-stage level-switch completion signal.

12. The level-switch control method according to claim 8, **characterized in that** after the stopping the charging operation when the charging cut-off condition is met, or after the stopping the discharging operation when the discharging cut-off condition is met, the level-switch control method further comprises:
leaving the dimmable device to rest and recording a rest duration; and
sending a second-stage level-switch completion signal when the rest duration reaches a preset rest duration.

13. The level-switch control method according to claim 8, **characterized in that** after the stopping the charging operation when the charging cut-off condition is met, or after the stopping the discharging operation when the discharging cut-off condition is met, the level-switch control method further comprises:
leaving the dimmable device to rest and recording a rest duration;
reading a third target open-circuit voltage and a third target level corresponding to a third level-switch instruction when the rest duration does not reach the preset rest duration and the third level-switch instruction is received;
determining that the third target level is the current target level, and/or determining that the third target open-circuit voltage is the current target open-circuit voltage; and
calculating to determine a third target charge quantity based on the third target open-circuit voltage and the first current open-circuit voltage, obtaining the current accumulated charge quantity of the dimmable device, and determining whether to perform the charging operation or the discharging operation on the dimmable device according to a magnitude relationship between the accumulated charge quantity and the third target charge quantity.

14. The level-switch control method according to claim 12, **characterized in that** the sending the second-stage level-switch completion signal when the rest duration reaches the preset rest duration comprises:
determining whether the current target level is a lowest level or a highest level when the rest duration reaches the preset rest duration; and
sending the second-stage level-switch completion signal when the current target level is the lowest level or the highest level.

15. The level-switch control method according to claim 12, **characterized in that** the sending the second-stage level-switch completion signal when the rest duration reaches the preset rest duration comprises:
determining whether the current target level is a lowest level or a highest level when the rest duration reaches the preset rest duration;
obtaining a second current open-circuit voltage of the dimmable device when the current target level is neither the lowest level nor the highest level;
calculating to determine a first voltage difference between the second current open-circuit voltage and the current target open-circuit voltage; and
sending the second-stage level-switch completion signal when the first voltage difference is in a preset voltage error range.

16. The level-switch control method according to claim 12, **characterized in that** the sending the second-stage level-switch completion signal when the rest duration reaches the preset rest duration comprises:
determining whether the current target level is a lowest level or a highest level when the rest duration reaches the preset rest duration;
obtaining a second current open-circuit voltage of the dimmable device when the current target level is neither the lowest level nor the highest level;
calculating to determine a first voltage difference between the second current open-circuit voltage and the current target open-circuit voltage; and
performing a charging correction or a discharging correction on the dimmable device when the first voltage difference is not in a preset voltage error range.

17. The level-switch control method according to claim 16, **characterized in that** after the performing the charging correction or the discharging correction on the dimmable device when the first voltage difference is not in the preset voltage error range, the level-switch control method further comprises:
obtaining a third current open-circuit voltage of the dimmable device;
calculating to determine a second voltage difference between the third current open-circuit voltage and the current target open-circuit voltage; and
sending the second-stage level-switch completion signal when the second voltage difference is in the preset voltage error range.

18. A level-switch control apparatus for a dimmable device, **characterized by** comprising:
a receiver configured to receive a first level-switch instruction, the first level-switch instruction carrying a first target open-circuit voltage;
a sampler configured to obtain a first current open-circuit voltage and a current temperature of the dimmable device;
a processor configured to determine a charging parameter or a discharging parameter applied to the dimmable device based on the current temperature, and determine a charging condition applied to the dimmable device based on the charging parameter or determine a discharging condition applied to the dimmable device based on the discharging parameter; and calculate to determine a first target charge quantity based on the first target open-circuit voltage and the first current open-circuit voltage, obtain a current accumulated charge quantity of the dimmable device, and determine whether to perform a charging operation or a discharging operation on the dimmable device according to a magnitude relationship between the accumulated charge quantity and the first target charge quantity; and
a driver configured to control based on the charging condition to perform a charging operation on the dimmable device, or to control based on the discharging condition to perform a discharging operation on the dimmable device.

19. The level-switch control apparatus according to claim 18, **characterized in that** the processor is specifically configured to:
determine a temperature range corresponding to the current temperature; and
determine the charging parameter or the discharging parameter applied to the dimmable device according to the temperature range and a corresponding relationship between the temperature range and the charging parameter or the discharging parameter.

20. The level-switch control apparatus according to claim 18, **characterized in that** the processor is specifically configured to:
determine a temperature range corresponding to the current temperature;
determine a transmittance variation range of the dimmable device based on the temperature range and a corresponding relationship between the temperature range and the transmittance variation range; and
determine the charging parameter or the discharging parameter applied to the dimmable device according to the transmittance variation range and a corresponding relationship between the transmittance variation range and the charging parameter or the discharging parameter.

21. The level-switch control apparatus according to claim 18, **characterized in that** the charging parameter comprises at least one of a maximum charging voltage, a maximum charging current, a charging cut-off current and a charging cut-off duration, or alternatively, the discharging parameter comprises at least one of a maximum discharging voltage, a maximum discharging current, a discharging cut-off current and a discharging cut-off duration.

22. The level-switch control apparatus according to claim 18, **characterized in that** the first level-switch instruction further carries a first target level, and the processor is further configured to:
determine that the first target level as a current target level, and/or determine that the first target open-circuit voltage is a current target open-circuit voltage.

23. The level-switch control apparatus according to claim 18, **characterized in that** the driver is further configured to:
interrupt the charging operation when a charging cut-off condition is not met but a second level-switch instruction is received; or interrupt the discharging operation when a discharging cut-off condition is not met but the second level-switch instruction is received.

24. The level-switch control apparatus according to claim 23, **characterized in that** the second level-switch instruction carries a second target open-circuit voltage and a second target level, and the processor is further configured to:
determine that the second target level is the current target level, and/or determine that the second target open-circuit voltage is the current target open-circuit voltage; and
calculate to determine a second target charge quantity based on the second target open-circuit voltage and the first current open-circuit voltage, and obtain the current accumulated charge quantity of the dimmable device, and determine whether to perform the charging operation or the discharging operation on the dimmable device according to a magnitude relationship between the accumulated charge quantity and the second target charge quantity.

25. The level-switch control apparatus according to claim 22 or 24, **characterized in that** the driver is further configured to:
stop a charging operation when the charging cut-off condition is met, or stop the discharging operation when a discharging cut-off condition is met.

26. The level-switch control apparatus according to claim 21, **characterized in that** the charging condition comprises at least one of the following conditions: a current charging current of the dimmable device is smaller than or equal to the maximum charging current, and a current charging voltage of the dimmable device is smaller than or equal to the maximum charging voltage; or
alternatively, the discharging condition comprises at least one of the following conditions: a current discharging current of the dimmable device is smaller than or equal to the maximum discharging current, and a current discharging voltage of the dimmable device is smaller than or equal to the maximum discharging voltage.

27. The level-switch control apparatus according to claim 23 or 25, **characterized in that** the charging cut-off condition is determined based on the charging parameter, and the charging parameter comprises at least one of a maximum charging voltage, a maximum charging current, a charging cut-off current and a charging cut-off duration, wherein the charging cut-off condition comprises at least one of the following conditions: a current charging current of the dimmable device is smaller than or equal to the charging cut-off current, the current accumulated charge quantity of the dimmable device is not smaller than the first target charge quantity or the second target charge quantity, and a current accumulated charging duration of the dimmable device is greater than or equal to the charging cut-off duration; or
alternatively, the discharging cut-off condition is determined based on the discharging parameter, and the discharging parameter comprises at least one of a maximum discharging voltage, a maximum discharging current, a discharging cut-off current and a discharging cut-off duration, wherein the discharging cut-off condition comprises at least one of the following conditions: a current discharging current of the dimmable device is smaller than or equal to the discharging cut-off current, the current accumulated charge quantity of the dimmable device is not greater than the first target charge quantity or the second target charge quantity, and a current accumulated discharging duration of the dimmable device is greater than or equal to the discharging cut-off duration.

28. The level-switch control apparatus according to claim 25, **characterized by** further comprising a transmitter configured to transmit a first-stage level-switch completion signal.

29. The level-switch control apparatus according to claim 25, **characterized in that** the processor is further configured to leave the dimmable device to rest and record a rest duration; and
the level-switch control apparatus further comprises a transmitter, and the transmitter is further configured to send a second-stage level-switch completion signal when the rest duration reaches a preset rest duration.

30. The level-switch control apparatus according to claim 25, **characterized in that** the processor is further configured to:
leave the dimmable device to rest and record a rest duration;
read a third target open-circuit voltage and a third target level corresponding to a third level-switch instruction when the rest duration does not reach the preset rest duration and the third level-switch instruction is received;
determine that the third target level as the current target level, and/or determine the third target open-circuit voltage as the current target open-circuit voltage; and
calculate to determine a third target charge quantity based on the third target open-circuit voltage and the first current open-circuit voltage, obtain the current accumulated charge quantity of the dimmable device, and determine whether to perform the charging operation or the discharging operation on the dimmable device according to a magnitude relationship between the accumulated charge quantity and the third target charge quantity.

31. The level-switch control apparatus according to claim 29, **characterized in that** the processor is further configured to:
determine whether the current target level is a lowest level or a highest level when the rest duration reaches the preset rest duration; and
the transmitter is further configured to:
send the second-stage level-switch completion signal when the current target level is the lowest level or the highest level.

32. The level-switch control apparatus according to claim 29, **characterized in that** the processor is further configured to:
determine whether the current target level is a lowest level or a highest level when the rest duration reaches the preset rest duration; and
the sampler is further configured to:
obtain a second current open-circuit voltage of the dimmable device when the current target level is neither the lowest level nor the highest level;
the processor is further configured to:
calculate to determine a first voltage difference between the second current open-circuit voltage and the current target open-circuit voltage; and
the transmitter is further configured to:
send the second-stage level-switch completion signal when the first voltage difference is in a preset voltage error range.

33. The level-switch control apparatus according to claim 29, **characterized in that** the processor is further configured to:
determine whether the current target level is a lowest level or a highest level when the rest duration reaches the preset rest duration; and
the sampler is further configured to:
obtain a second current open-circuit voltage of the dimmable device when the current target level is neither the lowest level nor the highest level;
the processor is further configured to:
calculate to determine a first voltage difference between the second current open-circuit voltage and the current target open-circuit voltage; and
the transmitter is further configured to:
perform a charging correction or a discharging correction on the dimmable device when the first voltage difference is not in a preset voltage error range.

34. The level-switch control apparatus according to claim 33, **characterized in that** the sampler is further configured to obtain a third current open-circuit voltage of the dimmable device;
the processor is further configured to calculate to determine a second voltage difference between the third current open-circuit voltage and the current target open-circuit voltage; and
the transmitter is further configured to send the second-stage level-switch completion signal when the second voltage difference is in the preset voltage error range.

35. A computer-readable storage medium, **characterized in that** a computer program is stored on the computer-readable storage medium, and when the computer program is executed by a computing processor, the level-switch control method for the dimmable device according to any one of claims 1 to 17 is implemented.

36. A level-switch control system for a dimmable device, **characterized by** comprising a terminal platform and the level-switch control apparatus for the dimmable device according to any one of claims 18 to 34, and wherein an information interaction is performed between the terminal platform and the level-switch control apparatus for the dimmable device.
